# EUROPEAN PATENT APPLICATION

(11) **EP 4 786 205 A1**
(43) Date of publication of application: **05.08.2026**
(21) Application number: 24869887.0
(22) Date of filing: 24.06.2024
(51) Int. Cl.: B60B 27/04, B62M 11/16, B62M 11/18

(54) **MANUAL-AUTOMATIC INTERNAL VARIABLE SPEED HUB AND BICYCLE**

(30) Priority: 26.09.2023 CN 202311252200
(71) Applicant: Guangdong Lofandi Intelligent Technology Co., Ltd, Guangzhou, Guangdong 510700 (CN)
(72) Inventor: LI, Jichu, Guangzhou, Guangdong 510700 (CN); LIN, Jiehuang, Guangzhou, Guangdong 510700 (CN); HE, Xu, Guangzhou, Guangdong 510700 (CN)
(74) Representative: Ripamonti, Enrico
(86) International application number: PCT/CN2024/100886
(87) International publication number: WO 2025/066327

(57) **Abstract**

A manual-automatic internal variable speed hub and a bicycle. The hub is provided with a torque assistance mechanism (6), when downshifting, a first connecting piece (61) and a second connecting piece (63) rotate relative to each other, a first end and a second end of the first positional reset piece (62) gradually approach each other, and the first positional reset piece (62) is compressed; at this moment, a first stop (611) of the first connecting piece (61) exits a clearance area of a first assistance pawl (64), thereby unblocking the first assistance pawl (64), and the first assistance pawl (64) is pushed up under the action of a second positional reset piece (66) and is engaged within a first connecting slot (73) of a torque constraining piece (7), causing the second connecting piece (63) and a third connecting piece (68) to rotate in the same direction as the torque constraining piece (7); torque from a second transmission piece (902) is sequentially transmitted, by means of the torque constraining piece (7), to a second connecting piece (63), a third connecting piece (68), and a manipulating apparatus (81), so as to overcome meshing force generated by locking grooves (9042) of sun gears (904, 907, 908) and gear shifting pawls (82, 83, 84), so that the gear shifting pawls (82, 83, 84) smoothly retract, thereby smoothly completing the downshifting operation.

## Description

The present application claims the priority to Chinese Patent Application No. 202311252200.1, titled "MANUAL-AUTOMATIC INTERNAL VARIABLE SPEED HUB AND BICYCLE", filed on September 26, 2023 with the China National Intellectual Property Administration, which is incorporated herein by reference in its entirety.

### FIELD

The present application relates to the technical field of internal transmissions and, in particular, to a manual-automatic integrated internal gear hub and a bicycle.

### BACKGROUND

An internal gear hub is generally unaffected by external rainwater, dust, and oil stains due to its closed structure, and thus has the advantages of low failure rate and maintenance free.

A Chinese patent document CN116353248A discloses a manual-automatic internal gear hub and a bicycle, including a buffer structure connected between a driving mechanism and a manipulation mechanism. By providing the buffer structure, a controller obtains a gear position information of a gear-shifting actuating gear and a gear position information of the gear-shifting protective member of the buffer structure and compares these two gear position information. When these two gear position information is synchronized, it indicates that the previous gear shift was normal, and the next gear shift can be executed normally. When the two gear position information is inconsistent, it indicates occurrence of a jamming phenomenon, and the controller needs to call a specific program to control a driving device to eliminate the jamming phenomenon before executing the next gear shift, thereby protecting the driving mechanism in case of jamming,

Although the buffer structure can eliminate the jamming phenomenon, the gear position may reset to the one before the gear shift, that is, the gear shift cannot be successful. Therefore, it is desired to make an improvement and a development of the existing technology.

### SUMMARY

An object of the present application is to provide a manual-automatic integrated internal gear hub and a bicycle, including a torque assistance mechanism which inputs the torque of the transmission mechanism other than the driving mechanism to the manipulation device of the manipulation mechanism in case of the occurrence of the jamming phenomenon to overcome the engaging force between the gear-shift pawl and the sun gear, achieving smooth shifting, and preventing the driving device from stall.

To address the aforementioned technical issues, a manual-automatic integrated internal gear hub is provided according to the present application, which includes a spindle, a transmission mechanism, a driving mechanism, a manipulation mechanism, an input member, and an output member. The spindle is fixed to a frame of a bicycle. The driving mechanism, the manipulation mechanism, and the transmission mechanism are sequentially connected and all mounted on the spindle.

The input member is fixedly connected to the transmission mechanism and is used to input torque to the transmission mechanism.

The output member is connected to the transmission mechanism and is used to output torque to the bicycle wheel.

The transmission mechanism includes a second transmission member, and transmits a torque in a first rotation direction.

The transmission mechanism has at least one transmission ratio.

The driving mechanism is electrically driven and is configured to rotate the manipulation mechanism to a predetermined angle manually and/or automatically, so as to change transmission relationships among components of the transmission mechanism and thus achieve a change in the transmission ratio of the transmission mechanism.

The manual-automatic integrated internal gear hub further includes a torque assistance mechanism, one end of which is connected to the manipulation mechanism, and the other end of which is connected to the second transmission member and the driving mechanism. The torque assistance mechanism includes a first connecting member, a second connecting member, a third connecting member which are rotatably connected to each other, and further includes a first return member. The first connecting member is configured to transmit torque which is output from the driving mechanism and is provided with a first stopper. The second connecting member is provided with a torque transmission structure. The third connecting member is connected to the manipulation mechanism and is configured to output torque.

One end of the first return member is connected to the first connecting member, and the other end of the first return member is connected to the second connecting member. The first return member has a first pre-tightening torque. The torque assistance mechanism is configured to, when the first connecting member rotates in the first rotation direction and the torque input from the first connecting member exceeds the first pre-tightening torque, and when the first connecting member and the third connecting member rotate relative to each other, the first return member is deformed to cause relative rotation between the first connecting member and the second connecting member, so that the torque transmission structure is released from the first stopper and connected to the second transmission member so as to transmit the torque from the second transmission member to the third connecting member.

Further, a third return member is provided between the second connecting member and the third connecting member. One end of the third return member is connected to the second connecting member, and the other end of the third return member is connected to the third connecting member. The third return member has a second pre-tightening torque. The torque assistance mechanism is further configured to, when the third connecting member rotates in a second rotation direction and inputs a torque exceeding the second pre-tightening torque, and when the first connecting member and the third connecting member rotate relative to each other, the third return member is deformed to cause relative rotation between the second connecting member and the third connecting member. The first rotation direction and the second rotation direction are opposite.

Further, the torque transmission structure includes an assistance pawl elastically hinged to the second connecting member, and the assistance pawl has a retracted state and an extended state. The assistance pawl is connected to the second transmission member in the extended state and disengaged from the second transmission member in the retracted state.

Further, the torque transmission structure includes a second return member, one end of which is fixed to the second connecting member, and the other end of which abuts against the assistance pawl.

Further, one side of the assistance pawl is provided with a locking portion, and the other side of the assistance pawl is provided with an avoidance area. A third contact surface is provided at transition between the avoidance area and the locking portion.

Further, the second connecting member is provided with a first contact surface, and the first stopper is separated from the first contact surface when moving in the first rotation direction. The first stopper abuts against the first contact surface when moving in the second rotation direction.

Further, the third contact surface of the assistance pawl and the first contact surface of the second connecting member are located in the same plane.

Further, the third connecting member is provided with a fifth stopper, and the second connecting member is provided with a fourth stopper. The fourth stopper abuts against the fifth stopper when moving in the first rotation direction and is separated from the fifth stopper when moving in the second rotation direction.

Further, the first pre-tightening torque of the first return member and the second pre-tightening torque of the third return member are oriented in opposite directions.

Further, the transmission mechanism includes at least two stages of planetary gear mechanism and at least one clutch structure. The driving mechanism is configured to enable torque to be output to the output member selectively through the clutch structure after being shifted with the planetary gear mechanisms by changing the transmission relationships of the planetary gear mechanisms manually and/or automatically. At least one supporting member is provided between the two stages of the planetary gear mechanisms.

Further, an inner wall of the supporting member is connected to the spindle, and an outer wall of the supporting member is connected to an inner wall of the first transmission member.

Further, the manual-automatic integrated internal gear hub further includes a fixation member that is fixedly connected to the spindle, and the supporting member is mounted on the fixation member.

Further, the supporting member is provided between the first sun gear and the second sun gear.

Further, two stages of the planetary gear mechanisms are provided, which are a first stage planetary gear mechanism and a second stage planetary gear mechanism. The first stage planetary gear mechanism and the second stage planetary gear mechanism are connected in series for transmission.

Further, the first stage planetary gear mechanism is configured for speed-increasing transmission.

Further, the first stage planetary gear mechanism includes a first sun gear, a first planetary gear, a first transmission member, and a second transmission member. The first planetary gear is rotatably connected to the first transmission member. The second transmission member has first gear teeth, and the first sun gear has third gear teeth, and the first planetary gear has sixth gear teeth. The third gear teeth of the first sun gear mesh externally with the sixth gear teeth of the first planetary gear, and the first gear teeth of the second transmission member mesh internally with the sixth gear teeth of the first planetary gear.

Further, a first clutch structure is provided between the first transmission member and the second transmission member.

Further, the second stage planetary gear mechanism is configured for speed-increasing transmission.

Further, the second stage planetary gear mechanism includes a second sun gear, a third sun gear, a first compound planetary gear, a second transmission member, and a third transmission member. The first compound planetary gear is rotatably connected to the second transmission member. The third transmission member has second gear teeth. The first compound planetary gear has seventh gear teeth and eighth gear teeth. The second sun gear has fourth gear teeth, and the third sun gear has fifth gear teeth. The fourth gear teeth of the second sun gear externally mesh with the seventh gear teeth of the first compound planetary gear. The fifth gear teeth of the third sun gear externally mesh with the eighth gear teeth of the first compound planetary gear. The second gear teeth of the third transmission member internally mesh with the eighth gear teeth of the first compound planetary gear.

Further, a second clutch structure is provided between the second transmission member and the third transmission member.

Further, a shaft sleeve is further included, which is connected to the output member. A third clutch structure is provided between the shaft sleeve and the third transmission member.

Further, the third clutch structure and the second clutch structure are located in the same plane perpendicular to the axis of the spindle.

Further, the outer circumferential surface of the shaft sleeve is provided thereon with anti-slip grooves.

Further, the driving mechanism is provided with a gear position feedback module.

Further, the gear position feedback module includes multiple gear-position Hall elements, which sense a magnetic field strength of a magnet mounted on a magnet seat of the torque assistance mechanism to obtain pulse signals and determine a gear position to which the driving device of the driving mechanism has rotated.

Further, the driving mechanism is provided with a rotation speed feedback module.

Further, the rotation speed feedback module includes a rotation speed Hall element, which senses a magnetic field strength of a magnet mounted in the magnet mounting slot of an end cover connected to the output member to obtain a pulse signal and calculate a rotation speed of the internal gear hub.

Further, the driving mechanism further includes a control box and a sealing cover connected to the control box. The control box is configured to accommodate a driving device and a circuit board. The circuit board is provided thereon with a gear position feedback module, a rotation speed feedback module, and a controller. The driving device, the gear position feedback module, and the rotation speed feedback module are each electrically connected to the controller.

Further, the manipulation mechanism includes a gear-shift pawl seat and a manipulation device. The gear-shift pawl seat is provided on the spindle, and a gear-shift pawl is hinged to the gear-shift pawl seat. The manipulation device is provided with an open groove, which is used for controlling an extension or a retraction of the gear-shift pawl to change the transmission relationships among components of the transmission mechanism.

Further, the output member is connected to an end cover, which is provided with a relief valve.

A bicycle is further provided according to the present application, which includes the aforementioned manual-automatic integrated internal gear hub.

As can be seen from the above, the manual-automatic integrated internal gear hub of the present application is provided with a torque assistance mechanism. During the downshifting, the first connecting member and the second connecting member rotate relative to each other, and the first end portion and the second end portion of the first return member moves towards each other, compressing the first return member 62. At this time, the first stopper of the first connecting member is moved away from the avoidance area of the first assistance pawl, releasing the first assistance pawl. In that case, the first assistance pawl is pushed by the second return member and inserted into the first connecting groove of the torque limiter, so that the second connecting member and the third connecting member rotate with the torque limiter in the same direction. The torque from the second transmission member is sequentially transmitted to the second connecting member, the third connecting member, and the manipulation device via the torque limiter. In this way, the engaging force between the gear-shift pawl and the locking groove of the sun gear is overcome, allowing the gear-shift pawl to smoothly retract and completing the downshift operation smoothly.

Additional features and advantages of the present application will be described in the following description and will partly become evident from the description or through the implementation of the present application. The purpose and other advantages of the present application can be realized and obtained through the specification, the claims, and the structure specially pointed out in the drawings.

### BRIEF DESCRIPTION OF THE DRAWINGS

FIG. 1 is a schematic structural view of a bicycle equipped with a manual-automatic integrated internal gear hub according to the present application.
FIG. 2 is a perspective view showing an operational state of the manual-automatic integrated internal gear hub according to the present application.
FIG. 3 is a perspective view of the manual-automatic integrated internal gear hub according to the present application.
FIG. 4 is a front view of the manual-automatic integrated internal gear hub according to the present application.
FIG. 5 is a right-side view of the manual-automatic integrated internal gear hub according to the present application.
FIG. 6 is a perspective view showing an assembly of a driving mechanism and a torque assistance mechanism.
FIG. 7 is an exploded view of the driving mechanism.
FIG. 8 is a perspective view of the torque assistance mechanism.
FIG. 9 is another perspective view of the torque assistance mechanism.
FIG. 10 is an exploded view of the torque assistance mechanism.
FIG. 11 is another exploded view of the torque assistance mechanism.
FIG. 12 is a front view of the torque assistance mechanism.
FIG. 13 is a schematic structural view of a second connecting member.
FIG. 14 is a schematic structural view of a first assistance pawl.
FIG. 15 is a schematic view of the torque assistance mechanism during an upshift process.
FIG. 16 is a schematic view of the torque assistance mechanism during a downshift process.
FIG. 17 is a perspective view of a torque limiter.
FIG. 18 is another perspective view of the torque limiter.
FIG. 19 is a front view of the torque limiter.
FIG. 20 is a schematic view showing interaction between the torque assistance mechanism and the torque limiter.
FIG. 21 is a perspective view of a manipulation mechanism.
FIG. 22 is a schematic structural view showing interaction between a first gear-shift pawl and a first sun gear.
FIG. 23 is a perspective view of a transmission mechanism.
FIG. 24 is another perspective view of the transmission mechanism.
FIG. 25 is a longitudinal sectional view of the transmission mechanism.
FIG. 26 shows a power transmission path of a first gear of the manual-automatic integrated internal gear hub according to the present application.
FIG. 27 shows a power transmission path of a second gear of the manual-automatic integrated internal gear hub according to the present application.
FIG. 28 shows a power transmission path of a third gear of the manual-automatic integrated internal gear hub according to the present application.
FIG. 29 shows a power transmission path of a fourth gear of the manual-automatic integrated internal gear hub according to the present application.
FIG. 30 shows a power transmission path of a fifth gear of the manual-automatic integrated internal gear hub according to the present application.
FIG. 31 shows a power transmission path of a sixth gear of the manual-automatic integrated internal gear hub according to the present application.
FIG. 32 is a longitudinal sectional view of a transmission mechanism according to another embodiment.
FIG. 33 is a schematic view showing an assembly of a relief valve.

Description of reference numerals:
1 output member;
2 end cover; 21 magnet mounting groove; 22 relief valve;
3 input member;
4 spindle; 41 position-limiting surface;
5 driving mechanism; 51 control box; 511 first through hole; 512 first position-limiting groove; 52 sealing cover; 53 positioning cover; 54 circuit board; 55 driving device; 56 speed reduction mechanism; 57 output gear;
6 torque assistance mechanism; 61 first connecting member; 611 first stopper; 612 second stopper; 613 tooth portion; 614 magnet seat; 615 first protrusion; 62 first return member; 621 first end portion; 622 second end portion; 63 second connecting member; 631 third stopper; 632 fourth stopper; 633 first stop block; 634 second stop block; 635 first contact surface; 636 second contact surface; 64 first assistance pawl; 641 locking portion; 642 third contact surface; 643 avoidance area; 65 second assistance pawl; 66 second return member; 67 third return member; 671 third end portion; 672 fourth end portion; 68 third connecting member; 681 fifth stopper; 682 sixth stopper; 683 first connecting portion;
7 torque limiter; 71 side wall; 72 second through hole; 73 first connecting groove; 74 resilient strip; 75 second connecting portion; 76 groove;
8 manipulation mechanism; 81 manipulation device; 811 third connecting portion; 812 first control portion; 813 second control portion; 814 third control portion; 82 first gear-shift pawl; 83 second gear-shift pawl; 84 third gear-shift pawl;
9 transmission mechanism; 901 first transmission member; 9011 input member mounting groove; 9012 first mounting groove; 9013 first clutch structure; 902 second transmission member; 9021 first gear tooth; 9022 second mounting groove; 9023 second clutch structure; 9024 second connecting groove; 903 third transmission member; 9031 second gear tooth; 9032 third clutch structure; 904 first sun gear; 9041 third gear tooth; 9042 locking groove; 905 supporting member; 906 fixation member; 907 second sun gear; 9071 fourth gear tooth; 908 third sun gear; 9081 fifth gear tooth; 909 first planetary gear; 9091 sixth gear tooth; 910 first compound planetary gear; 9101 seventh gear tooth; 9102 eighth gear tooth; 911 shaft sleeve;
10 control module; 11 gear-shifting operation module.

### DETAILED DESCRIPTION OF THE EMBODIMENTS

The embodiments of the present application are described in detail hereinafter, and examples of the embodiments are shown in the drawings, where the same or similar reference numerals represent the same or similar elements or elements having the same or similar functions throughout the description. These examples with reference to the accompanying drawings are exemplarily and only for the explanation of the present application, and should not be constructed as a limitation of the present application.

Throughout the description of the present application, it should be understood that the orientation or positional relationships indicated by terms such as "center", "longitudinal", "lateral", "length", "width", "thickness", "up", "down", "forward", "backward", "left", "right", "vertical", "horizontal", "top", "bottom", "inner", "outer", "clockwise", "anticlockwise", and the like are based on the orientation or positional relationships shown in the drawings, and are merely for the convenience of describing the present application and the simplification of the description, instead of indicating or implying that the device or component referred must be arranged in a particular orientation, or be constructed and operated in a particular orientation, and therefore should not be construed as a limitation to the scope of the present application. Furthermore, the terms "first", "second" are merely for purpose of description, and should not be construed as indicating or implying relative importance or implying the number of the indicated technical features. Therefore, the features defined by "first" and "second" may explicitly or implicitly include one or more of the features. In the description of the present application, the term "a plurality of" means two or more, unless specifically defined otherwise.

In the description of the present application, unless otherwise specified and limited, terms "mounting", "linkage", and "connection" should be broadly interpreted. For example, the "connection" may indicate a fixed connection, a removable connection, or an integral connection; may indicate a mechanical connection or an electrical connection or a connection in communication; may indicate a direct connection or an indirect connection via an intermediate medium; may indicate an internal communication between two components or an interaction between two components. Those skilled in the art may understand meanings of the foregoing terms in the present application based on specific conditions.

In the present application, unless otherwise explicitly defined and limited, the first feature being located "above" or "below" the second feature may include direct contact between the first and second features, and may also include indirect contact between the first and second features via another feature between them. Furthermore, the first feature being "above", "over" and "on" the second feature includes that the first feature is directly above and obliquely above the second feature, or simply indicates that the first feature is higher in horizontal height than the second feature. The first feature being "below", "under" and "lower than" the second feature includes that the first feature is directly below and obliquely below the second feature, or simply indicates that the first feature is lower in horizontal height than the second feature.

The disclosure hereinafter provides multiple different embodiments or examples for implementing different structures of the present application. To simplify the present application, components and settings in specific embodiments are described below. Of course, they are only examples and are not intended to limit the present application. Furthermore, according to the present application, reference numerals and/or reference letters may be repeated in different examples for the purpose of simplicity and clarity, which do not indicate a relationship between various embodiments and/or arrangements discussed. In addition, examples of various specific processes and materials are provided according to the present application. However, those skilled in the art may appreciate the application of other processes and/or the use of other materials.

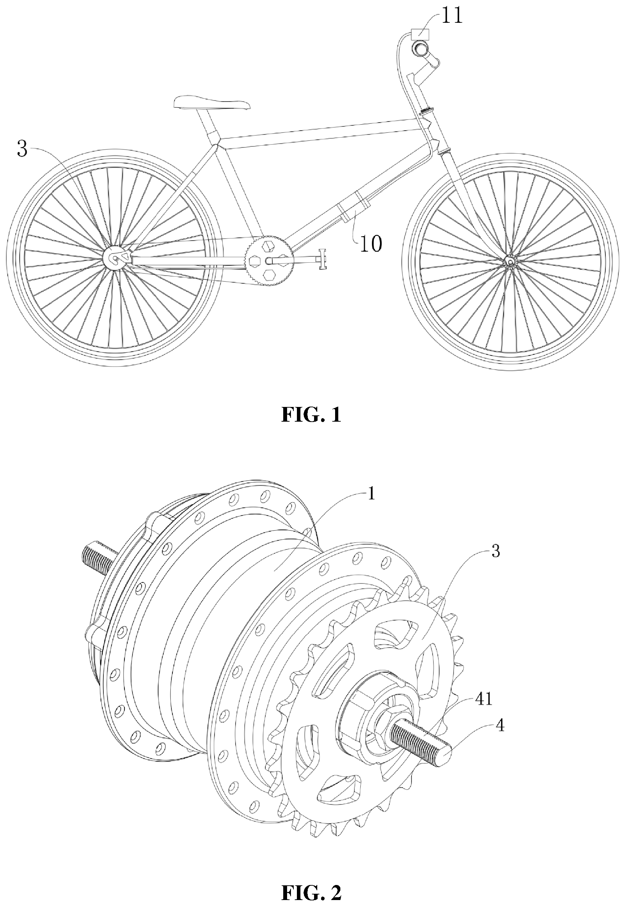

FIG. 1 is a schematic structural view of a bicycle equipped with a manual-automatic integrated internal gear hub according to the present application. As shown, the manual-automatic integrated internal gear hub is laced to a rim of a rear wheel of the bicycle via spokes. A spindle 4 of the internal gear hub is inserted into a mounting groove of a rear fork of a bicycle frame. Both ends of the spindle 4 have threads to be fastened with two nuts, respectively, thereby fixing the spindle 4 to the bicycle frame. To change the gear ratio of the internal gear hub manually or automatically, a control module 10 and a gear-shifting operation module 11 are further needed for control.

In some embodiments, a controller, the internal gear hub, and the gear-shifting operation module 11 are powered by a power source built into the control module10. Of course, alternative power supply methods may also be available. For example, power may be provided by a front hub with a self-generating function, or by a rear hub with a self-generating function which is further provided in addition to this internal gear hub, or additionally provided by a photovoltaic panel that absorbs sunlight and converts it into electrical energy, etc.

FIG. 2 is a perspective view showing an operational state of the manual-automatic integrated internal gear hub according to the present application. An input member 3 is fixedly mounted on a right side of the manual-automatic integrated internal gear hub. The input member 3 is used to transmit the torque generated by pedaling applied by a rider. In a chain transmission system, the input member 3 is a cassette. The rider drives the crank by pedaling, which in turn rotates the chainring. The chainring drives the cassette to rotate via a chain, thereby driving the output member 1 to rotate and propelling the rear wheel forward. In a belt transmission system, the input member 3 is a rear pulley. The rider drives the crank by pedaling, which in turn rotates the front pulley. The front pulley drives the rear pulley to rotate via a belt, thereby driving the output member 1 to rotate and propelling the rear wheel forward. In a shaft transmission system, the input member 3 is a bevel gear. Correspondingly, the rider outputs torque to the bevel gear via a transmission shaft, driving the output member 1 to rotate.

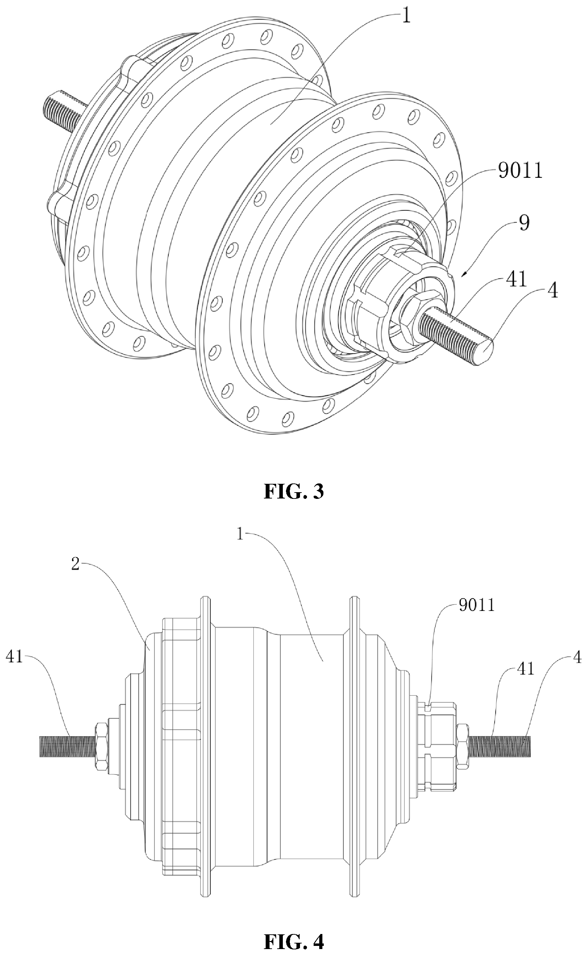

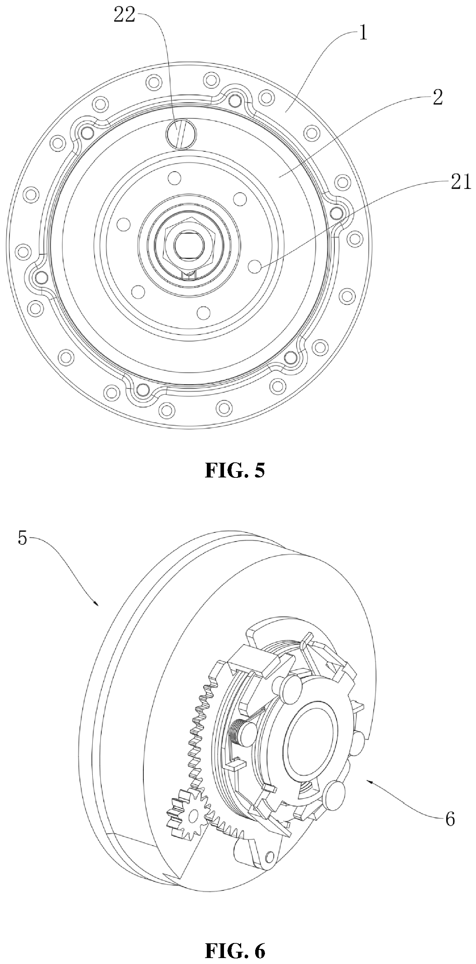

FIG. 3 is a perspective view of the manual-automatic integrated internal gear hub according to the present application. FIG. 4 is a front view of the manual-automatic integrated internal gear hub according to the present application. FIG. 5 is a right-side view of the manual-automatic integrated internal gear hub according to the present application. An end cover 2 is provided at the left end of the internal gear hub, and an output member 1 is provided at the right end of the internal gear hub. The end cover 2 is engaged with the output member 1 to define a sealed cavity. Inside the cavity, there are provided a driving mechanism 5, a torque assistance mechanism 6, a torque limiter 7, a manipulation mechanism 8, and a transmission mechanism 9. A spindle 4 is provided extending through a center of the internal gear hub. The driving mechanism 5, the torque assistance mechanism 6, the torque limiter 7, the manipulation mechanism 8, and the transmission mechanism 9 are mounted sequentially from left to right on the spindle 4. The spindle 4 is configured as a stepped smooth shaft as a whole. The outer circumferential surfaces of both ends of the spindle 4 are threaded so that the spindle is secured to the rear fork of the frame by nuts. The spindle 4 is further machined with two position-limiting surfaces 41. Both position-limiting surfaces 41 are parallel to an axis of the spindle 4, and are parallel to each other. The position-limiting surfaces 41 functions to assemble and limit the driving mechanism 5 and the manipulation mechanism 8. The manipulation mechanism 8 is provided inside the transmission mechanism 9, and the outer side of the transmission mechanism 9 is connected to the output member 1 to transmit torque.

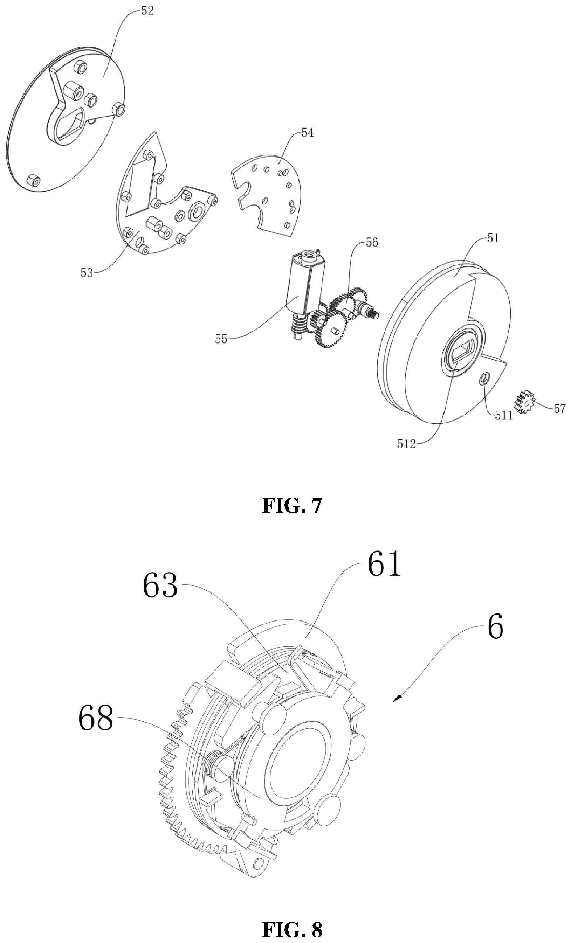

FIG. 6 is a perspective view showing an assembly of the driving mechanism 5 and the torque assistance mechanism 6. FIG. 7 is an exploded view of the driving mechanism 5. The driving mechanism 5 of the manual-automatic integrated internal gear hub in the present application includes a control box 51, a sealing cover 52 mounted at an opening of the control box 51, and a positioning cover 53 used to position a speed reduction mechanism 56. A driving device 55, the speed reduction mechanism 56 and a circuit board 54 are mounted inside the control box 51. A first position-limiting groove 512 is provided at and runs through the center of the control box 51. The first position-limiting groove 512 is shaped to match with the longitudinal section of the spindle 4 taken at the position-limiting surface 41, and thus functions to prevent the control box 51 from rotating freely after being mounted on the spindle 4. To facilitate the power supply and transmission of control signals to the circuit board 54, the control box 51 is also provided with a wire passing hole, and cables pass through the wire passing hole from the outside of the control box 51 and are connected to the circuit board 54. The control box 51 is further provided with a first through hole 511 through which the output shaft of the driving device 55 passes. A sealed structure is formed inside the control box 51, which can effectively protect the circuit board 54 and the driving device 55 from moisture and dust, extending the service life of the driving device 55

The circuit board 54 is semi-circular in shape. The circuit board 54 is provided with a gear position feedback module, which is used to obtain the gear position to which the driving device 55 of the driving mechanism 5 has rotated. In a specific embodiment, a controller and a gear-position Hall element are welded on the circuit board 54. In this embodiment, the manual-automatic integrated internal gear hub is equipped with six gears, and six gear-position Hall elements are correspondingly provided. When a magnet mounted on a magnet seat 614 of the torque assistance mechanism 6 rotates around the axis and sweeps over the gear-position Hall element, the gear-position Hall element generates a corresponding pulse by sensing change of the magnetic field strength. Thus, it is possible to determine which gear position has been rotated to by obtaining this pulse signal.

To obtain the rotation speed of the internal gear hub for controlling automatically gear shifting thereof, the driving mechanism 5 is provided with a rotation speed feedback module, which includes a rotation speed Hall element. The rotation speed Hall element is welded on the circuit board 54. Referring to FIG. 5, the end cover 2 is provided with a magnet mounting groove 21 on its side surface. The magnet mounted in the magnet mounting groove 21 is located in alignment with the position of the rotation speed Hall element 644. During the rotation of the internal gear hub, the controller obtains the rotation speed by detecting the number of pulses per unit time generated by the rotation speed Hall element. The greater the number of pulses, the higher the frequency and the higher the rotation speed of the internal gear hub, and vice versa.

In this embodiment, the driving device 55 is a motor. To reduce the thickness of the driving device 55 and reserve sufficient space for the manipulation mechanism 8 and the transmission mechanism 9, the motor is mounted horizontally in a mounting groove of the control box 51. To reduce the output rotation speed of the driving device 55 and improve the output torque, a speed reduction mechanism 56 is mounted at the output end of the driving device 55. In a specific embodiment, the speed reduction mechanism 56 is a combination of a worm gear mechanism and a gear reduction mechanism. The output shaft of the driving device 55 extends through the first through hole 511 of the control box 51 and is secured to the output gear 57. The output gear 57 meshes externally with the tooth portion 613 of the torque assistance mechanism 6.

During an upshift process, due to the fact where gear-shift pawls are in a retracted state, the manipulation device 81 only needs to overcome the tension of a retaining spring assembled to the gear-shift pawls during rotation, and the tension is not large. Therefore, the jamming phenomenon between the manipulation mechanism 8 and the transmission mechanism 9 during gear shifting is not likely to occur. However, during a downshift process, due to the fact where the gear-shift pawls are in an extended state, a part of gear-shift pawls abut against locking grooves 9042 of the sun gear, generating a very large engaging force at the contact surfaces. The manipulation device 81 needs to overcome this large engaging force during rotation, and the driving device 55 may stall due to an excessive load, easily resulting in the occurrence of the jamming phenomenon between the manipulation mechanism 8 and the transmission mechanism 9 during gear shifting. If the driving mechanism 5 continues to run after the occurrence of the jamming phenomenon, it may cause damage to the driving mechanism 5, decrease in the repositioning accuracy of the manipulation mechanism 8, the motor burnout, or other issues. To prevent the occurrence of the above issues, a torque assistance mechanism 6 is provided, such that the torque of the transmission mechanism 9 in addition to the drive mechanism 5 is input to the manipulation device 81 of the manipulation mechanism 8 in case of the occurrence of the jamming phenomenon to resist the engaging force between the gear-shift pawl and the sun gear, thereby preventing the drive device 55 from stalling and achieving a smooth gear shift.

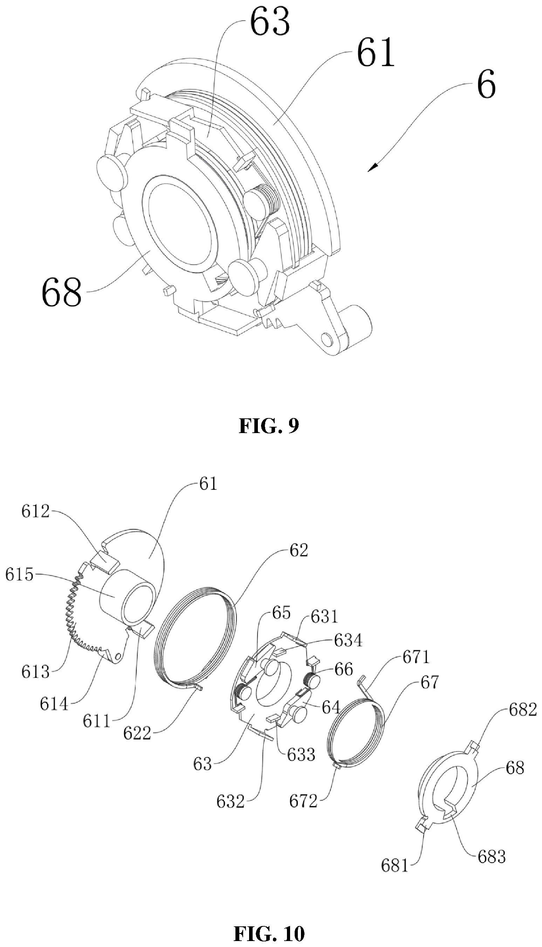

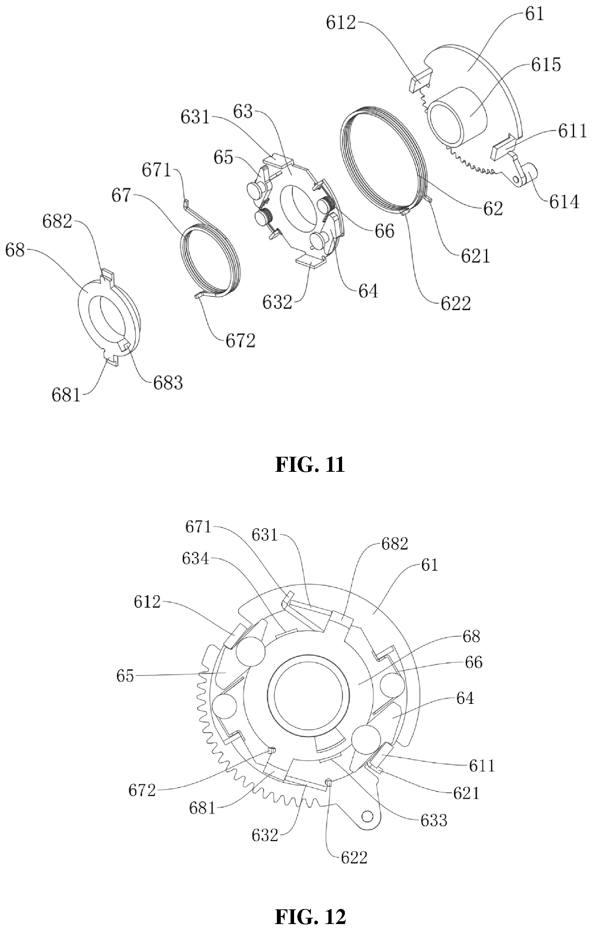

FIG. 8 is a perspective view of the torque assistance mechanism 6. FIG. 9 is another perspective view of the torque assistance mechanism 6. FIG. 10 is an exploded view of the torque assistance mechanism 6. FIG. 11 is another exploded view of the torque assistance mechanism 6. FIG. 12 is a front view of the torque assistance mechanism 6. The torque assistance mechanism 6 includes a first connecting member 61, a second connecting member 63, a third connecting member 68, a first return member 62, a second return member 66, a third return member 67, and a torque transmission structure. The first return member 62, the second return member 66, and the third return member 67 may be configured as an element such as torsion spring, spiral spring, or snap ring that can provide torsional restoring force, and are configured as torsion springs in this embodiment. The torsion spring has a helical structure. When being subjected to torque, the torsion spring undergoes an elastic deformation, and the helical structure accumulates torsional energy. When the external force is released or decreases, the spring releases the accumulated energy and restores its original shape.

The first connecting member 61 is configured to transmit the torque output from the driving mechanism 5. The first connecting member 61 is in shape of circular plate as a whole. An edge of the first connecting member 61 is machined with a tooth portion 613 for externally meshing with the output gear 57 of the driving mechanism 5. The edge of the first connecting member 61 is further provided thereon with a magnet seat 614 for mounting a magnet to be sensed by the gear-position Hall element. The edge of the first connecting member 61 is further provided thereon with a first stopper 611 and a second stopper 612, which are arranged opposite to each other and have the same structures. The first stopper 611 and the second stopper 612 may be formed by a bending process. The center of the first connecting member 61 is provided thereon with a cylindrical first protrusion 615, and the orientation of the cylindrical first protrusion 615 is the same as that of the first stopper 611. The second connecting member 63 and the third connecting member 68 are rotatably connected to the first protrusion 615.

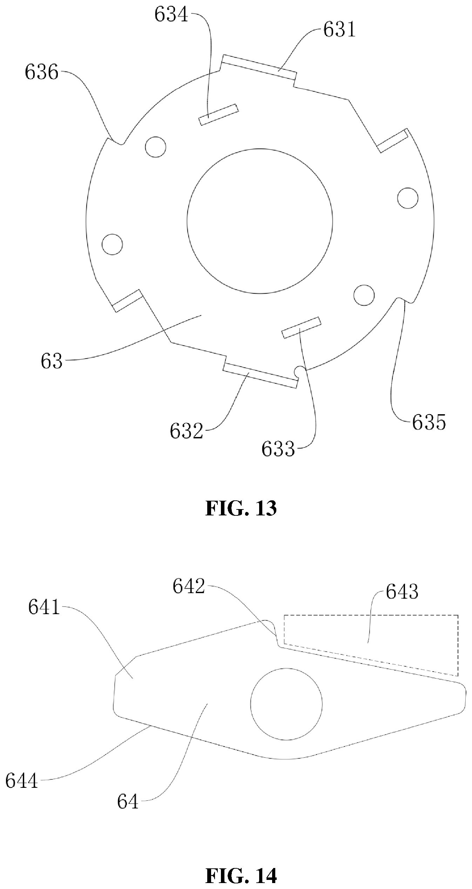

FIG. 13 is a schematic structural view of the second connecting member 63. The second connecting member 63 is in shape of circular plate as a whole, and the edge of the second connecting member 63 is provided thereon with a third stopper 631 and a fourth stopper 632. The third stopper 631 and the fourth stopper 632 are arranged opposite to each other and have the same structures. The third stopper 631 and the fourth stopper 632 may also be formed by a bending process.

The torque transmission structure includes an assistance pawl, which is elastically hinged to the second connecting member 63. The number of the assistance pawls is two, including a first assistance pawl 64 and a second assistance pawl 65. The assistance pawl has a retracted state and an extended state. In the extended state, the assistance pawl is connected to the second transmission member 902, and in the retracted state, the assistance pawl is disconnected from the second transmission member 902. In this embodiment, the first assistance pawl 64 is mounted on the second connecting member 63 via a cylindrical pin and can freely rotate around the axis of the cylindrical pin. The second return member 66 is elastically hinged to another cylindrical pin. One end of the second return member 66 is fixed to the second connecting member 63, and the other end of the second return member 66 abuts with the first assistance pawl 64.

The center of the second connecting member 63 is provided therein with a circular hole, and the diameter of the circular hole matches with the diameter of the cylindrical first protrusion 615 of the first connecting member 61. The second connecting member 63 is provided on the first connecting member 61, such that the second connecting member 63 and the first connecting member 61 can rotate relative to each other.

The edge of the second connecting member 63 is further provided thereon with a first contact surface 635 and a second contact surface 636. The first contact surface 635 is configured to be in contact with a side surface of the first stopper 611 of the first connecting member 61, and the second contact surface 636 is configured to be in contact with a side surface of the second stopper 612 of the first connecting member 61.

The structure of the first assistance pawl 64 is shown in FIG. 14. A locking portion 641 is provided on the left side of the first assistance pawl 64, and an abutment surface that always abuts against the second return member 66 is provided under the locking portion 641. The end portion of the second return member 66 abuts against the abutment surface to provide a force perpendicular to the abutment surface and oriented upward to the right, so that the first assistance pawl 64 has a trend of clockwise rotation. The left and right sides of the first assistance pawl 64 have different heights, and the height of the right side is lower than that of the left side, that is, an avoidance area 643 is formed on the right side. A third contact surface 642 is formed at transition between the avoidance area 643 and the locking portion 641 and tilted to the vertical line.

The avoidance area 643 allows the first stopper 611 of the first connecting member 61 to rotate thereto. When the first stopper 611 rotates to the avoidance area 643, the side surface of the first stopper 611 abuts against the third contact surface 642 of the first assistance pawl 64, which can block the clockwise rotation trend of the first assistance pawl 64. When the first stopper 611 rotates away from the avoidance area 643, the first stopper 611 releases the first assistance pawl 64, and the first assistance pawl 64 can rotate clockwise.

It is undesired that the rotation angle of the first assistance pawl 64 is too large, otherwise the first stopper 611 would not able to push the third contact surface 642 counterclockwise to retract the first assistance pawl 64. Therefore, the first connecting member 61 is provided with a first stop block 633 below the right side of the first assistance pawl 64, and the first stop block 633 is used to limit the clockwise rotation angle of the first assistance pawl 64. Similarly, a second stop block 634 is provided to limit the clockwise rotation angle of the second assistance pawl 65.

After the first assistance pawl 64 is mounted on the second connecting member 63, the third contact surface 642 of the first assistance pawl 64 and the first contact surface 635 of the second connecting member 63 are located in the same plane.

The first return member 62 has a first end portion 621 and a second end portion 622. The first end portion 621 is engaged with the side surface of the first stopper 611 of the first connecting member 61, and the first end portion 621 is engaged with the side surface of the third stopper 631 of the second connecting member 63. The first return member 62 has a first pre-tightening torque during a mounting process, which enables the first return member 62 to be stably and reliably engaged between the first connecting member 61 and the second connecting member 63. The first pre-tightening torque is slightly greater than the torque that can smoothly drive the manipulation device 81 to rotate under a normal downshift condition.

The third connecting member 68 is connected to the manipulation device 81, and has a circular ring shape as a whole. The two ends of the third connecting member 68 are respectively provided with fifth and sixth stoppers 681 and 682 that are arranged opposite to each other. Similar to the second connecting member 63, the center of the third connecting member 68 is also provided therein with a circular hole, and the diameter of the circular hole matches with the diameter of the cylindrical first protrusion 615 of the first connecting member 61. The third connecting member 68 is provided on the first connecting member 61, such that the third connecting member 68 and the first connecting member 61 can rotate relative to each other.

The third connecting member 68 is provided with a first connecting portion 683 in which the manipulation device 81 is inserted. The manipulation device 81 and the third connecting member 68 are fixed relative to each other and rotate synchronously.

The third return member 67 has a third end portion 671 and a fourth end portion 672. The third end portion 671 is engaged with the side surface of the third stopper 631 of the second connecting member 63, and the fourth end portion 672 is engaged with the side surface of the fifth stopper 681 of the third connecting member 68. The third return member 67 has a second pre-tightening torque during the mounting process, which enables the third return member 67 to be stably and reliably engaged between the second connecting member 63 and the third connecting member 68.

The fifth stopper 681 of the third connecting member 68 is located between the fourth end portion 672 of the third return member 67 and the second end portion 622 of the first return member 62. The second pre-tightening torque of the third return member 67 and the first pre-tightening torque of the first return member 62 are opposite in direction, so that the fifth stopper 681 of the third connecting member 68 and the fourth stopper 632 of the second connecting member 63 can abut against each other. Similarly, the sixth stopper 682 is positioned to abut against the third stopper 631 of the second connecting member 63.

When rotating clockwise under a torque, the second connecting member 63 pushes the third connecting member 68 to rotate synchronously. In case that the third connecting member 68 is fixed, when the second connecting member 63 is subjected to a counterclockwise rotation torque greater than the second pre-tightening torque of the third return member 67, the third return member 67 is twisted to store energy, and the fifth stopper 681 and the fourth stopper 632 rotate away from each other. When removing the torque that rotates the second connecting member 63 counterclockwise, the fifth stopper 681 and the fourth stopper 632 abut against each other again.

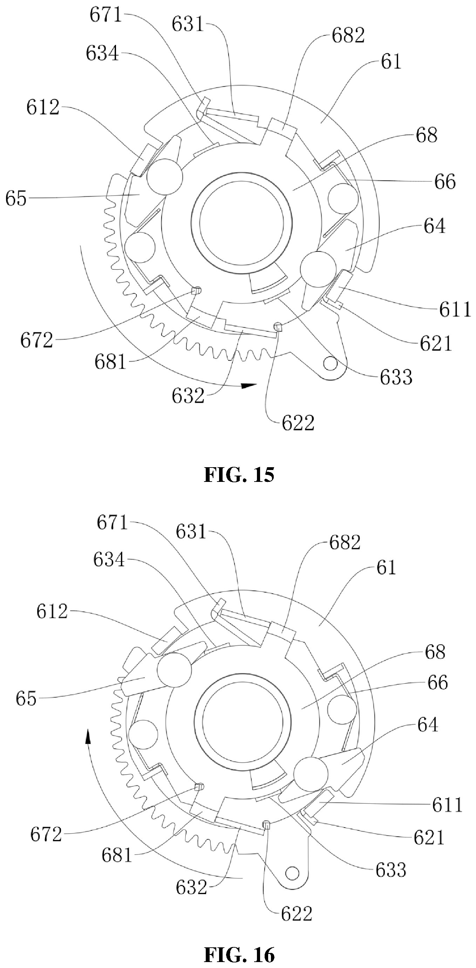

As shown in FIG. 15, during the upshift process, the output gear 57 rotates to drive the second connecting member 63 to rotate counterclockwise (in the second rotation direction). At this moment, the gear-shift pawl is in a retracted state. The gear-shift pawl does not apply a large resistance torque to the manipulation device 81 when moving from the retracted state to the extended state. Under the torque provided by the driving device 55, it is sufficient to drive the manipulation device 81 to resist the resistance torque and complete the gear shift operation. In other words, during the upshift process, the torque assistance mechanism 6 is mostly inactive. In case that the jamming phenomenon occurs during gear shift, the third connecting member 68 is stationary and the first connecting member 61 rotates counterclockwise relative to the third connecting member 68. At this moment, the side surfaces of the first stopper 611 and the second stopper 612 of the first connecting member 61 respectively push the first contact surface 635 and the second contact surface 636 of the second connecting member 63, so that the second connecting member 63 is driven by the first connecting member 61 to rotate counterclockwise. Since the first connecting member 61 and the second connecting member 63 do not rotate relative to each other, the first return member 62 is uncompressed, while the second connecting member 63 and the third connecting member 68 rotate relative to each other. During the counterclockwise rotation of the second connecting member 63, the fifth stopper 681 of the third connecting member 68 moves away from the fourth stopper 632 of the second connecting member 63, and the third end portion 671 and the fourth end portion 672 of the third return member 67 moves towards each other. The output power of the driving device 55 is increased to increase the torque to prevent stall. When the torque is increased to exceed the second pre-tightening torque, the third return member 67 is compressed. In that case, the first assistance pawl 64 is always blocked by the first stopper 611 of the first connecting member 61 and thus cannot be extended out. In this process, the torque assistance mechanism 6 performs a buffering function, avoiding damage to the driving device 55 due to stall caused by the rigid connection between the first connecting member 61 and the third connecting member 68.

As shown in FIG. 16, during the downshift process, the output gear 57 rotates to drive the first connecting member 61 to rotate clockwise (in the first rotation direction). At this time, a part of gear-shift pawls are in an extended state and a very large engaging force is generated between the gear-shift pawls and the locking groove 9042 of the sun gear. The manipulation device 81 needs to resist the aforementioned engaging force to complete the gear shift. In case that the jamming phenomenon occurs during gear shift, the third connecting member 68 is stationary and the first connecting member 61 rotates clockwise relative to the third connecting member 68. Since the fourth stopper 632 of the second connecting member 63 abuts against the fifth stopper 681 of the third connecting member 68, the second connecting member 63 and the third connecting member 68 are stationary, and the third return member 67 is uncompressed. The output power of the driving device 55 is increased to increase the torque to prevent stall. When the torque is increased to exceed the first pre-tightening torque, the first connecting member 61 and the second connecting member 63 rotate relative to each other, and the first end portion 621 and the second end portion 622 of the first return member 62 moves towards each other, that is, the first return member 62 is compressed. At this time, the first stopper 611 of the first connecting member 61 is moved away from the avoidance area 643 of the first assistance pawl 64, releasing the first assistance pawl 64. As a result, the first assistance pawl 64 is pushed by the second return member 66 and moves into the first connecting groove 73 of the torque limiter 7, so that the second connecting member 63 and the third connecting member 68 rotate with the torque limiter 7 in the same direction. The torque from the second transmission member 902 is sequentially transmitted to the second connecting member 63, the third connecting member 68, and the manipulation device 81 via the torque limiter 7, thereby resisting the engaging force between the gear-shift pawl and the locking groove 9042 of the sun gear, allowing the gear-shift pawl to smoothly retract and complete the downshift operation smoothly.

In addition, the torque assistance mechanism 6 is formed by assembling only three connecting members which can be formed by a sheet metal process, having a simple structure, a low cost, and ease of assembly.

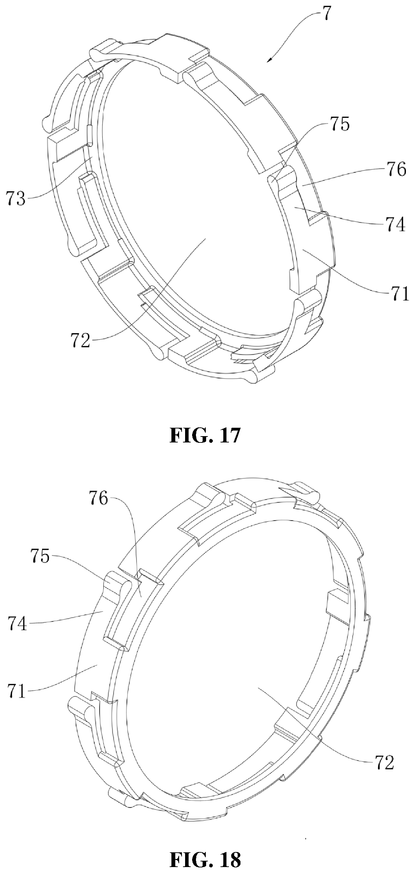

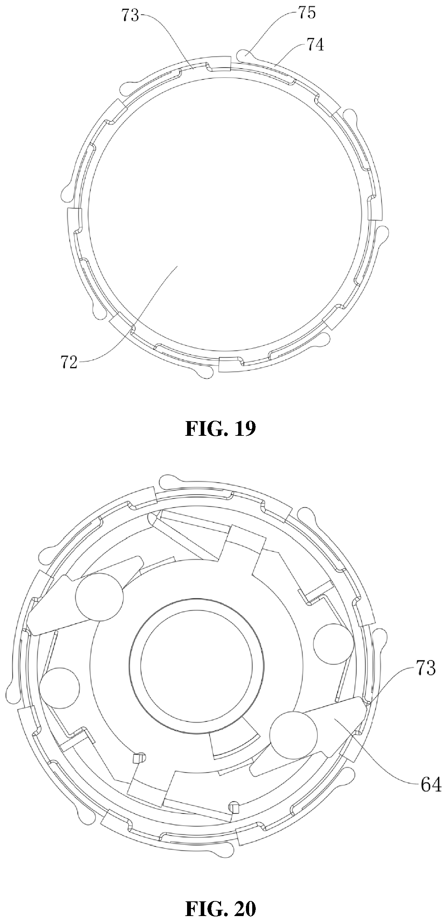

FIG. 17 is a perspective view of a torque limiter 7. FIG. 18 is another perspective view of the torque limiter 7. FIG. 19 is a front view of the torque limiter 7. FIG. 20 is a schematic view showing interaction between the torque assistance mechanism 6 and the torque limiter 7. The torque limiting mechanism includes a torque limiter 7 and a torque input member. The torque limiter 7 has a deformable portion, and the torque input member is provided with a second connecting groove 9024. When subjected to a torque larger than the rated torque, the deformable portion is engaged with the second connecting groove 9024. The deformable portion undergoes elastic deformation when subjected to a torque greater than the rated torque so as to be disengaged from the second connecting groove 9024.

In this embodiment, the second transmission member 902 of the transmission mechanism 9 may be configured as the torque input member, which will be mentioned in detail below. During the pedaling process of the rider, the input member 3 is driven to rotate and inputs torque. According to the characteristics of the planetary gear mechanism, the planetary carrier is configured for inputting, and the sun gear is fixed, and the ring gear is configured for outputting. That is, the rotation direction and the torque direction of the second transmission member 902 are always the same as those of the first transmission member 901. Since the internal gear hub has the torque input only from the input member 3 without any other external torque input, according to the constant power formula, the rotation speed of the first transmission member 901 is inversely proportional to the rotation speed of the second transmission member 902, and the torque of the first transmission member 901 is also inversely proportional to the torque of the second transmission member 902. During the entire transmission process of the hub, except for the first gear, the gears feature input via the planetary carrier, the fixed sun gear, and output via the ring gear, achieving speed-increasing transmission, that is, the rotation speed of the second transmission member 902 is higher than that of the first transmission member 901 and the torque of the second transmission member 902 is less than that of the first transmission member 901. Therefore, it is easier to control torque by connecting the torque limiter 7 to the second transmission member 902 than to the first transmission member 901.

A second connecting groove 9024 is provided in the inner wall of the second transmission member 902, and the inner wall of the second transmission member 902 has a diameter slightly greater than the diameter of the side wall 71 of the torque limiter 7. The torque limiter 7 is rotatably assembled to the second transmission member 902.

The torque limiter 7 is cylindrical as a whole, and a second through hole 72 is provided at the center of the torque limiter 7 to accommodate the torque assistance mechanism 6. The torque limiter 7 has a side wall 71, on which multiple broken zones are arranged in the circumferential direction, forming multiple resilient strips 74. The resilient strip 74 is deformable. The curvature of the resilient strips 74 is consistent with that of the side wall 71 in the normal state. One end of the resilient strips 74 is provided thereon with a second connecting portion 75, and the shape of the second connecting portion 75 matches with the shape of the second connecting groove 9024. In this embodiment, the second connecting portion 75 has a cross section in a droplet shape, and the connecting portion protrudes outward from the side wall 71. The second connecting portion 75 is inserted into the second connecting groove 9024.

To engage with the assistance pawl of the torque assistance mechanism 6, multiple first connecting grooves 73 are formed on the inner side of the side wall 71.

If the torque of the second transmission member 902 is less than the rated torque (allowable torque), the second connecting groove 9024 of the second transmission member 902 drives the second connecting portion 75 of the resilient strip 74 of the torque limiter 7 to rotate synchronously. The torque of the second transmission member 902 applies a force to the resilient strip 74, and the force is directed from the outside of the side wall 71 to the inside of the side wall 71, so that the resilient strip 74 undergoes an elastic deformation and is pressed toward the inside of the side wall 71. However, the elastic deformation of the resilient strip 74 is not enough to completely disengage the second connecting portion 75 from the second connecting groove 9024. Therefore, the torque of the second transmission member 902 is completely transmitted to the torque limiter 7.

If the torque of the second transmission member 902 is greater than the rated torque (allowable torque), the resilient strip 74 is pressed enough, causing the second connecting portion 75 of the resilient strip 74 to be completely disengaged from the second connecting groove 9024. At this time, the second transmission member 902 and the torque limiter 7 rotate relative to each other, i.e., slippage. The torque of the second transmission member 902 can only be partially transmitted to the torque limiter 7, with the maximum transmitted torque being less than or equal to the rated torque.

In the practical application, the torque input to the first transmission member 901 and then transmitted to the second transmission member 902 by pedaling at a constant speed by the rider is relatively large, usually in a range of 20 to 50N·m; the torque applied by the driving device 55 is usually 2N·m or less; and the rated torque designed for the torque limiter 7 is usually in a range of 5 to 10N·m. Therefore, in most cases, the torque limiter 7 is in a state of partial-torque transmission. When the rider rides at a low speed, the torques of the first transmission member 901 and the second transmission member 902 are relatively small, so that the torque limiter 7 is in a state of full-torque transmission.

The torque limiter 7 may be formed by a stamping process. To facilitate the ejection of the resilient strip 74 of the torque limiter 7 from a mold, multiple grooves 76 are formed on the side wall 71. The groove 76 is located on one side of the second connecting portion 75 and has a length approximately equal to that of the resilient strip 74. The finished product of the torque limiter 7 is quickly removed from the mold when finishing the stamping process, allowing the finished product to be completely demolded.

By providing the torque limiting mechanism, the torque transmitted to the torque limiter 7 from the second transmission member 902 is controllable and strictly controlled to be less than the rated torque. In this way, it can not only provide additional torque to the manipulation mechanism 8 during downshift process to eliminate jamming, but also can avoid excessive torque output to the manipulation device 81, which would otherwise cause the manipulation device 81 to rotate beyond the limit and result in gear slipping.

To provide a sufficient space for the elastic deformation of the resilient strip 74 as well as considering the strength of the entire torque limiter 7, the connecting portion and the second connecting groove 9024 are arranged in a staggered manner in the circumferential direction to avoid the interference between the pressed resilient strip 74 and the assistance pawl.

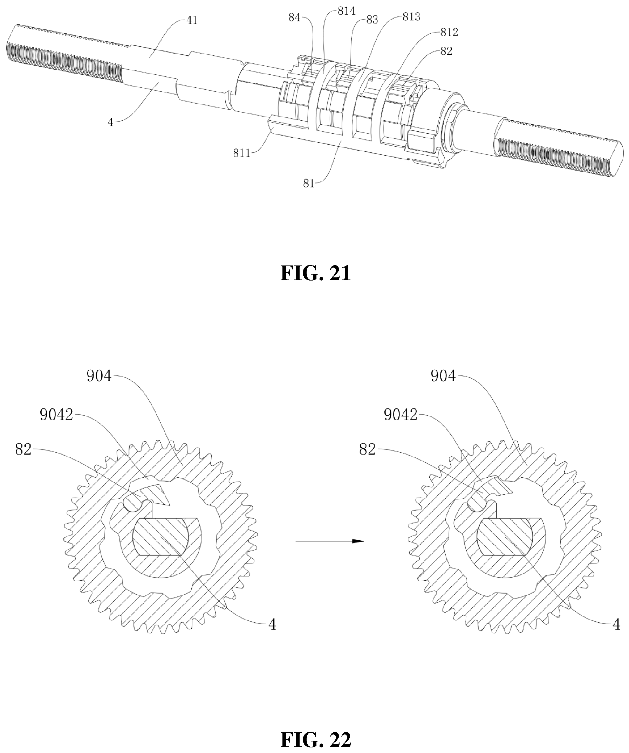

FIG. 21 is a perspective view of a manipulation mechanism 8. The manipulation mechanism 8 includes a manipulation device 81, gear-shift pawls, and gear-shift pawl seats. The gear-shift pawls are mounted on the gear-shift pawl seats. The manipulation device 81 has an open groove. The driving device 55 drives the manipulation device 81 to rotate, so that the gear-shift pawls are controlled to be retracted and extended regularly.

In this embodiment, to achieve control of multiple gear positions and facilitate assembly, the manipulation device 81 is provided with three control portions, including a first control portion 812, a second control portion 813, and a third control portion 814. The first control portion 812, the second control portion 813, and the third control portion 814 of the manipulation device 81 are arranged from right to left in sequence. There are reserved spaces between two adjacent control portions for mounting the gear-shift pawl seats and the gear-shift pawls. For example, a first gear-shift pawl 82 is mounted in the space on the right side of the first control portion 812; a fixation member 906 is mounted in the space between the first control portion 812 and the second control portion 813; the second gear-shift pawl is mounted in the space between the second control portion 813 and the third control portion 814; and a third gear-shift pawl 84 is mounted in the space on the left side of the third control portion 814.

A third connecting portion 811 is provided at the leftmost end of the manipulation device 81, and is used to facilitate the assembly with the driving device 55. The third connecting portion 811 matches with the second connecting portion 75 of the third connecting member 68. For example, the second connecting portion 75 is configured as a square protrusion, and the third connecting portion 811 is configured as a corresponding square groove. Conversely, the second connecting portion 75 may be configured as a square groove, and the third connecting portion 811 is configured as a corresponding square protrusion.

The first control portion 812, the second control portion 813, and the third control portion 814 each have a curved arm structure and each are provided on the inner wall with an open groove for driving the gear-shift pawl to be extended and retracted. The first control portion 812, the second control portion 813, and the third control portion 814 have outer diameters, which are equal to the outer diameters of the respective gear-shift pawl seats, thereby reducing the radial dimension of the manipulation device 81 and making the entire internal gear hub more compact.

By controlling the manipulation device to rotate to different angles, different gear-shift pawls can be controlled to be extended or retracted, thereby shifting to different gears. In a specific embodiment, when the manipulation device 81 is rotated to the first gear position angle, the gear-shift pawls are all in the retracted state; when the manipulation device 81 is rotated to the second gear position angle, the second gear-shift pawl 83 is extended, and the remaining gear-shift pawls are retracted; when the manipulation device 81 is rotated to the third gear position angle, the third gear-shift pawl 84 is extended, and the remaining gear-shift pawls are retracted; when the manipulation device 81 is rotated to the fourth gear position angle, the first gear-shift pawl 82 is extended, and the remaining gear-shift pawls are retracted; when the manipulation device 81 is rotated to the fifth gear position angle, the first gear-shift pawl 82 and the second gear-shift pawl 83 are extended, and the remaining gear-shift pawls are retracted; and when the manipulation device 81 is rotated to the sixth gear position angle, the second gear-shift pawl 83 and the third gear-shift pawl 84 are extended, and the remaining gear-shift pawls are retracted.

During the above gear shifting process, when shifting between two adjacent gear positions, for example, shifting from the second gear position to the third gear position or from the fifth gear position to the sixth gear position, only one gear-shift pawl is switched to be extended rather than two at the same time, which can reduce the torque output from the driving mechanism 5 to the manipulation device 81 and improve the success rate of shifting.

FIG. 22 is a schematic structural view showing interaction between a first gear-shift pawl 82 and a first sun gear 904. The first sun gear 904 is supported by a bearing, and is provided at the center with a locking groove 9042. The locking groove 9042 is shaped like a spline groove, with the difference being that the groove wall of the locking groove 9042 flares outward. The groove wall of the locking groove 9042 matches with the side wall 71 of the first gear-shift pawl 82. When the first gear-shift pawl 82 is retracted inward, the locking portion 641 of the first gear-shift pawl 82 is not in contact with the groove wall of the locking groove 9042, and the first sun gear 904 is in a free state. When the first gear-shift pawl 82 is extended outward, the locking portion 641 of the first gear-shift pawl 82 abuts against the groove wall of the locking groove 9042, and the first sun gear 904 is in a locked state, that is, the third sun gear 908 cannot rotate counterclockwise.

Similarly, the second sun gear 907 and the third sun gear 908 are provided with the same locking groove 9042.

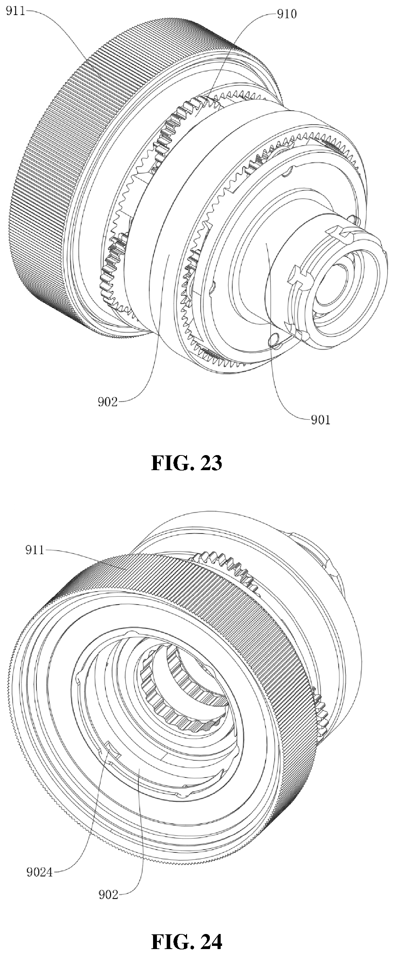

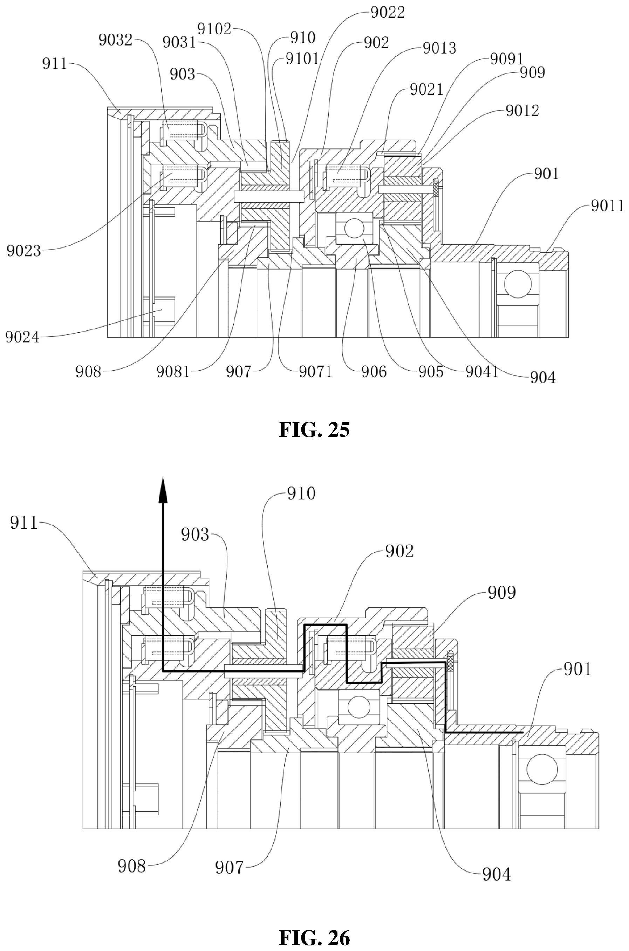

FIG. 23 is a perspective view of a transmission mechanism 9. FIG. 24 is another perspective view of the transmission mechanism 9. FIG. 25 is a longitudinal sectional view of the transmission mechanism 9. The transmission mechanism 9 includes a planetary gear mechanism having at least two stages and at least one clutch structure. In this embodiment, the planetary gear mechanism having two stages is provided. Each planetary gear mechanism includes a sun gear, a planet carrier, a ring gear, and at least one planetary gear. The transmission mechanism 9 includes a first transmission member 901, a second transmission member 902, a third transmission member 903, a first sun gear 904, a second sun gear 907, a third sun gear 908, a first planetary gear 909, and a first compound planetary gear 910. The first-stage planetary gear mechanism includes the first sun gear 904, the first planetary gear 909, the first transmission member 901, and the second transmission member 902. The second-stage planetary gear mechanism includes the second sun gear 907, the third sun gear 908, the first compound planetary gear 910, the second transmission member 902, and the third transmission member 903.

The first transmission member 901 is of a hollow cylindrical structure with a large diameter at the left end and a small diameter at the right end. On the outer circumferential surface of the right end of the first transmission member 901, provided is an input member mounting groove 9011. The input member 3 is mounted in the input member mounting groove 9011 and is fastened to the first transmission member 901 to transmit torque. The first sun gear 904 and a supporting member 905 are mounted in the left end of the first transmission member 901 of the hollow cylindrical structure. The first sun gear 904 is limited by a retaining ring at its left and right sides.

The outer circumferential surface of the first transmission member 901 is provided thereon with a first mounting groove 9012. The two opposite groove walls of the first mounting groove 9012 are respectively machined therein with two mounting holes. The first planetary gear 909 is mounted in the first mounting groove 9012 by passing a pin through the central hole of the first planetary gear 909 and the bearing. The pin is limited by retaining rings at both ends thereof. The pin is in an interference fit with the mounting holes; the central hole of the first planetary gear and the bearing are in a clearance fit or a transition fit with the pin, allowing the first planetary gear 909 to rotate around its own axis.

The first planetary gear 909 has sixth gear teeth 9091, and a first sun gear 904 is mounted directly under the first planetary gear 909. The third gear teeth 9041 of the first sun gear 904 mesh externally with the sixth gear teeth 9091 of the first planetary gear 909.

In this embodiment, there are four first mounting grooves 9012, allowing four first planetary gears 909 to be mounted. The number of first planetary gears 909 may be determined depending on the actual working condition and the load condition of the transmission mechanism 9. The greater the load is, the more the first planetary gears 909 are provided.

The second transmission member 902 is of a hollow cylindrical structure with a small diameter at the left end and a large diameter at the right end. The first gear teeth 9021, which functions as the ring gear of the planetary gear mechanism, are provided at the opening of the second transmission member 902 at the right end thereof. The first gear teeth 9021 of the second transmission member 902 mesh internally with the sixth gear teeth 9091 of the first planetary gear 909.

The second sun gear 907 and the third sun gear 908 are mounted in left end of the second transmission member 902 of the hollow cylindrical structure. The second sun gear 907 and the third sun gear 908 are arranged side by side and limited by retaining rings at the left and right ends thereof.

The outer circumferential surface of the second transmission member 902 is provided thereon with a second mounting groove 9022. The two groove walls of the second mounting groove 9022 are respectively provided with two mounting holes. The first compound planetary gear 910 is mounted in the second mounting groove 9022 by inserting a pin through the central hole of the first compound planetary gear 910 and the bearing. The pin is limited by the retaining rings at both ends. The pin is in an interference fit with the mounting holes, the central hole of the first compound planetary gear and the bearing are in a transition fit or a clearance fit with the pin, allowing the first compound planetary gear 910 to rotate around its own axis

The first compound planetary gear 910 has seventh gear teeth 9101 and eighth gear teeth 9102. The seventh gear teeth 9101 are located on the right side of the eighth gear teeth 9102. Directly under the first compound planetary gear 910, the second sun gear 907 and the third sun gear 908 are mounted. The fourth gear teeth 9071 of the second sun gear 907 mesh externally with the seventh gear teeth 9101 of the first compound planetary gear 910, and the fifth gear teeth 9081 of the third sun gear 908 mesh externally with the eighth gear teeth 9102 of the first compound planetary gear 910.

A first clutch structure 9013 is provided at the leftmost end of the first transmission member 901. The bottom surface of the first clutch structure 9013 is connected to the outer circumferential surface of the first transmission member 901, and the top surface of the first clutch structure 9013 is connected to the inner circumferential surface of the second transmission member 902. When the rotation speed of the first transmission member 901 is higher than that of the second transmission member 902, the first clutch structure 9013 is engaged, so that the torque of the first transmission member 901 equals to that of the second transmission member 902 and is output. When the rotation speed of the second transmission member 902 is higher than that of the first transmission member 901, the first clutch structure 9013 is disengaged so that the torque of the second transmission member 902 is output.

By providing the first clutch structure 9013 between the first transmission member 901 and the second transmission member 902, the torque may be selectively transmitted from one of the first transmission member 901 (planet carrier) and the second transmission member 902 (ring gear) that rotates at a higher rotation speed, thereby changing the transmission ratio.

Second gear teeth 9031 are provided at the opening of the right end of the third transmission member 903. The second gear teeth 9031 of the third transmission member 903 internally mesh with the eighth gear teeth 9102 of the first compound planetary gear 910. A third clutch structure 9032 is provided at the left end of the third transmission member 903. A second clutch structure 9023 is provided at the leftmost end of the second transmission member 902. The bottom surface of the second clutch structure 9023 is connected to the outer circumferential surface of the second transmission member 902, and the top surface of the second clutch structure 9023 is connected to the inner circumferential surface of the third transmission member 903. The bottom surface of the third clutch structure 9032 is connected to the inner circumferential surface of the third transmission member 903, and the top surface of the third clutch structure 9032 is connected to the inner circumferential surface of the shaft sleeve 911.

To make the transmission mechanism as compact as possible, the third clutch structure 9032 and the second clutch structure 9023 may be located in a same plane perpendicular to the axis of the spindle 4.

It should be noted that the first transmission member 901, the second transmission member 902, the third transmission member 903, and the shaft sleeve 911 are typically made of steel material, and the output member 1 is typically made of aluminum alloy material. It is undesired to dispose the third clutch structure 9032 directly between the third transmission member 903 and the output member 1 because the rollers may impact the inner circumferential surface of the output member 1 and cause indentations. The shaft sleeve 911 made of steel may be provided between the third transmission member 903 and the output member 1 to avoid this issue. Further, to ensure a firm assembly between the shaft sleeve 911 and the output member 1, the outer circumferential surface of the shaft sleeve 911 is provided thereon with anti-slip grooves. The anti-slip grooves greatly increase the surface friction, allowing the shaft sleeve 911 to be assembled with the output member 1 more firmly so as to prevent it from loosening from the output member 1. The anti-slip grooves may be straight or oblique, and may be formed by knurling tools.

The functions of the first clutch structure 9013, the second clutch structure 9023, and the third clutch structure 9032 are the same, which will not be repeated here.

In this manual-automatic integrated internal gear hub, the manipulation device 81 of the manipulation mechanism 8 is driven by the driving mechanism 5 to rotate to different angles. For example, when the manipulation device is rotated from the first gear position angle to the second gear position angle, the internal gear hub shifts up from the first gear to the second gear. When the manipulation device is rotated from the second gear position angle to the first gear position angle, the internal gear hub shifts down from the second gear to the first gear. There are two driving modes for the driving mechanism 5: manual mode and automatic mode. To switch between the driving modes, the internal gear hub needs to be provided with a gear-shifting operation module 11. The gear-shifting operation module 11 is mounted on the handlebar of the bicycle, and the rider can control it by pressing with their fingers. The gear-shifting operation module 11 has a mode switching button, an upshift button, and a downshift button. The manual mode and the automatic mode can be switched by the rider pressing the mode switching button. In manual mode, the rider can upshift by pressing the upshift button and downshift by pressing the downshift button. In automatic mode, the rider does not need to make any operations, and the internal gear hub executes gear shifting operations based on the vehicle speed. For example, when the vehicle speed reaches 10 kilometers per hour, it automatically shifts up from the first gear to the second gear. For example, when the vehicle speed drops below 10 kilometers per hour, it automatically shifts down from the second gear to the first gear. The rider can either switch to manual mode to freely change gears based on the actual road conditions, improving riding flexibility, or switch to automatic mode to automatically change gears, improving riding comfort

FIG. 26 shows a power transmission path of a first gear of the manual-automatic integrated internal gear hub.

In the first gear state, the first to third sun gears 904, 907, and 908 are all in a free state. When a torque is input from the input member 3, it is firstly transmitted to the first transmission member 901. The first transmission member 901 is rotated and then drives the first planetary gear 909 to rotate. The first sun gear 904 idles. The rotation speed of the first transmission member 901 is higher than that of the second transmission member 902, and thus the first clutch structure 9013 is engaged to enable the first transmission member 901 and the second transmission member 902 to rotate synchronically, so that the torque of the first transmission member 901 is transmitted to the second transmission member 902. Similarly, the second transmission member 902 is rotated and then drives the first compound planetary gear 910 to rotate. The third sun gear 908 idles. The second clutch structure 9023 and the third clutch structure 9032 are both engaged, transmitting the torque of the second transmission member 902 to the third transmission member 903 and then to the shaft sleeve 911. The shaft sleeve 911 is secured to the output member 1, which then outputs the torque to the wheel. In this case, the internal gear hub does not conduct the gear shift through the planetary gear mechanism having two stages. This transmission ratio is defined as the first transmission ratio.

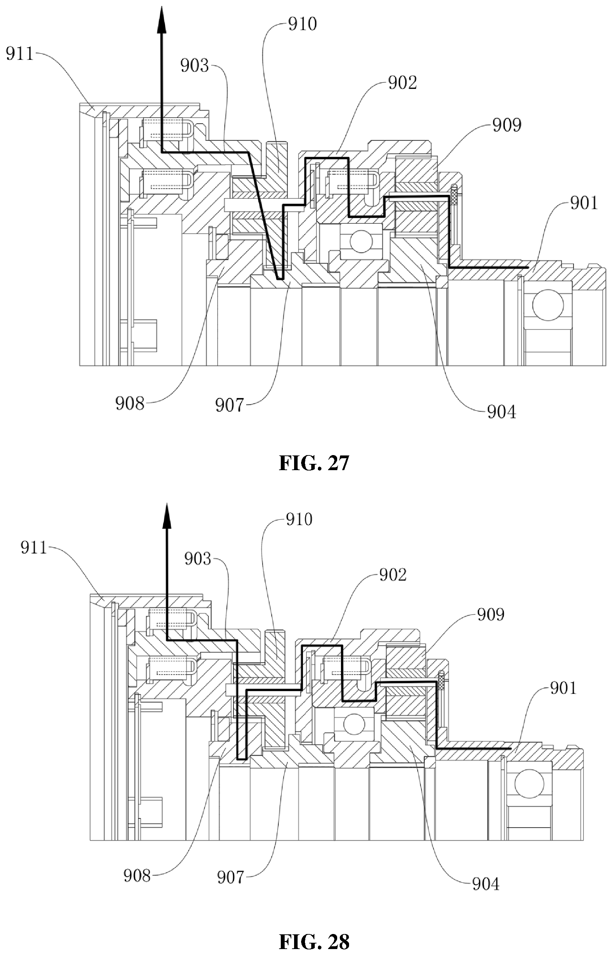

FIG. 27 shows a power transmission path of a second gear of the manual-automatic integrated internal gear hub.

In the second gear state, the second sun gear 907 is locked, and the first and third sun gears 904 and 908 are both in a free state. When torque is input from the input member 3, it is firstly transmitted to the first transmission member 901. The first transmission member 901 is rotated and then drives the first planetary gear 909 to rotate. The first sun gear 904 idles. The first clutch structure 9013 is engaged to enable the first transmission member 901 and the second transmission member 902 to rotate synchronically, and the second transmission member 902 is rotated and then drives the first compound planetary gear 910 to rotate. The seventh gear teeth 9101 of the first compound planetary gear 910 mesh with the fourth gear teeth 9071 of the second sun gear 907. The rotation speed of the third transmission member 903 is higher than that of the second transmission member 902. The second clutch structure 9023 is disengaged and does not work, and the third clutch structure 9032 is engaged. The third transmission member 903 transmits the torque to the shaft sleeve 911. The shaft sleeve 911 is secured to the output member 1, which then outputs the torque to the wheel. In this case, this transmission ratio of the internal gear hub is defined as the second transmission ratio.

FIG. 28 shows a power transmission path of a third gear of the manual-automatic integrated internal gear hub.

In the third gear state, the second sun gear 907 is locked, and the first and third sun gears 904 and 908 are both in a free state. When torque is input from the input member 3, it is firstly transmitted to the first transmission member 901. The first transmission member 901 is rotated and then drives the first planetary gear 909 to rotate. The first sun gear 904 idles. The first clutch structure 9013 is engaged to enable the first transmission member 901 and the second transmission member 902 to rotate synchronically, the second transmission member 902 is rotated and then drives the first compound planetary gear 910 to rotate. The eighth gear teeth 9102 of the first compound planetary gear 910 mesh with the fifth gear teeth 9081 of the third sun gear 908. The rotation speed of the third transmission member 903 is higher than that of the second transmission member 902. The second clutch structure 9023 is disengaged and does not work, and the third clutch structure 9032 is engaged. The third transmission member 903 transmits the torque to the shaft sleeve 911. The shaft sleeve 911 is secured to the output member 1, which then outputs the torque to the wheel. In this case, this transmission ratio of the internal gear hub is defined as the third transmission ratio.

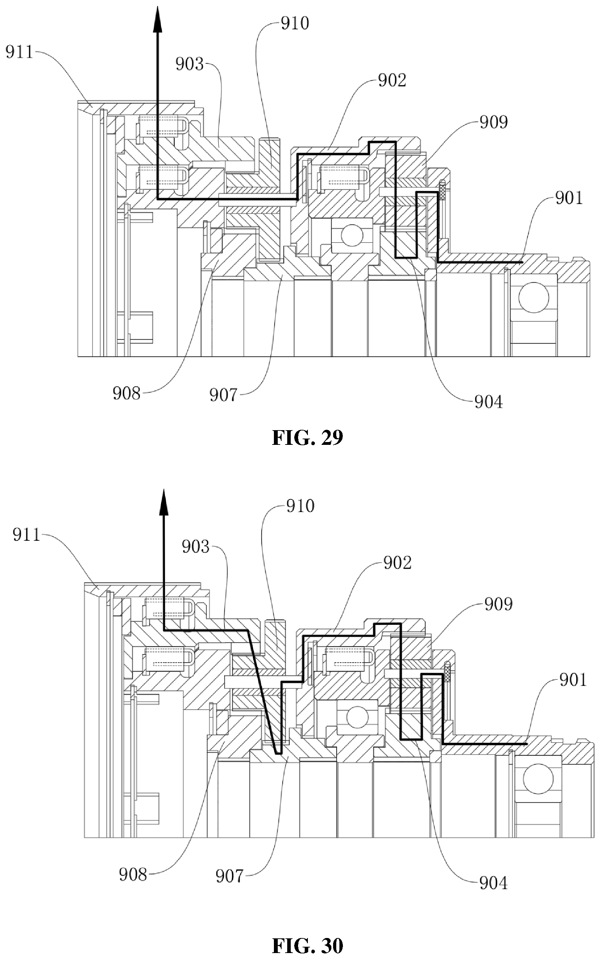

FIG. 29 shows a power transmission path of a fourth gear of the manual-automatic integrated internal gear hub.

In the fourth gear state, the first sun gear 904 is locked, and the second and third sun gears 907 and 908 are both in a free state. When torque is input from the input member 3, it is firstly transmitted to the first transmission member 901. The first transmission member 901 is rotated and then drives the first planetary gear 909 to rotate. The sixth gear teeth 9091 of the first planetary gear 909 externally mesh with the third gear teeth 9041 of the first sun gear 904. The rotation speed of the second transmission member 902 is higher than that of the first transmission member 901, and the first clutch structure 9013 is disengaged and does not work at this time. The second transmission member 902 is rotated and then drives the first compound planetary gear 910 to rotate. The third sun gear 908 idles, and the second clutch structure 9023 and the third clutch structure 9032 are both engaged, transmitting the torque of the second transmission member 902 to the third transmission member 903 and then to the shaft sleeve 911. The shaft sleeve 911 is secured to the output member 1, which then outputs the torque to the wheel. In this case, this transmission ratio of the internal gear hub is defined as the fourth transmission ratio.

FIG. 30 shows a power transmission path of a fifth gear of the manual-automatic integrated internal gear hub.

In the fifth gear state, the first sun gear 904 and the second sun gear 907 are locked, and the third sun gear 908 is in a free state. When torque is input from the input member 3, it is firstly transmitted to the first transmission member 901. The first transmission member 901 is rotated and then drives the first planetary gear 909 to rotate. The sixth gear teeth 9091 of the first planetary gear 909 externally mesh with the third gear teeth 9041 of the first sun gear 904. The rotation speed of the second transmission member 902 is higher than that of the first transmission member 901, and the first clutch structure 9013 is disengaged and does not work at this time. The second transmission member 902 is rotated and then drives the first compound planetary gear 910 to rotate. The seventh gear teeth 9101 of the first compound planetary gear 910 mesh with the fourth gear teeth 9071 of the second sun gear 907. The second clutch structure 9023 is disengaged and does not work, and the third clutch structure 9032 is engaged. The third transmission member 903 transmits the torque to the shaft sleeve 911. The shaft sleeve 911 is secured to the output member 1, which then outputs the torque to the wheel. In this case, this transmission ratio of the internal gear hub is defined as the fifth transmission ratio.

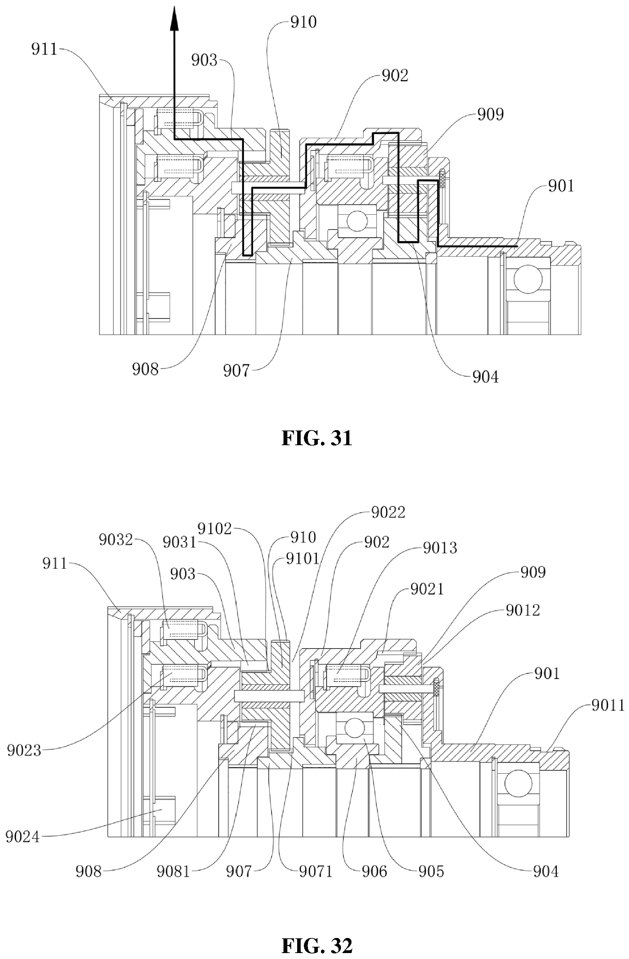

FIG. 31 shows a power transmission path of a sixth gear of the manual-automatic integrated internal gear hub.

In the sixth gear state, the first sun gear 904 and the third sun gear 908 are locked, and the second sun gear 907 is in a free state. When torque is input from the input member 3, it is firstly transmitted to the first transmission member 901. The first transmission member 901 is rotated and then drives the first planetary gear 909 to rotate. The sixth gear teeth 9091 of the first planetary gear 909 externally mesh with the third gear teeth 9041 of the first sun gear 904. The rotation speed of the second transmission member 902 is higher than that of the first transmission member 901, and the first clutch structure 9013 is disengaged and does not work at this time. The second transmission member 902 is rotated and then drives the first compound planetary gear 910 to rotate. The eighth gear teeth 9102 of the first compound planetary gear 910 mesh with the fifth gear teeth 9081 of the third sun gear 908. The rotation speed of the third transmission member 903 is higher than that of the second transmission member 902. The second clutch structure 9023 is disengaged and does not work, and the third clutch structure 9032 is engaged. The third transmission member 903 transmits the torque to the shaft sleeve 911. The shaft sleeve 911 is secured to the output member 1, which then outputs the torque to the wheel. In this case, this transmission ratio of the internal gear hub is defined as the sixth transmission ratio.

It can be seen that the first to sixth transmission ratios are all less than or equal to 1. The lower the gear, the lower the rotation speed and the greater the torque, making it suitable for climbing or carrying heavy loads. The higher the gear, the higher the rotation speed and the smaller the torque, making it suitable for riding downslope or carrying light loads. To enhance shifting smoothness, the number of the first gear teeth 9021 to the eighth gear teeth 9102 may be reasonably adjusted so that the first to sixth transmission ratios can be fitted into a binary linear equation.

As can be seen from FIGS. 26 to 31, all the power transmission paths of the first gear to the sixth gear need to pass through the first transmission member 901. The first transmission member 901 has a large span and is subjected to a large torque, which is prone to bending and deformation. If the first transmission member 901 deforms, the first planetary gear 909 mounted on the first transmission member 901 may be displaced, thereby causing the first sun gear 904 to be displaced and thus increasing the wear of the gear-shift pawl against the locking groove 9042 of the first sun gear 904. The gear-shift pawl cannot effectively lock the sun gear over time, resulting in gear jumping. Therefore, by providing the supporting member 905 between the two stages of planetary gear mechanisms, specifically between the first sun gear 904 and the second sun gear 907, the inner wall of the supporting member 905 is connected to the spindle 4, and the outer wall of the supporting member 905 is connected to the inner wall of the first transmission member 901. The supporting member 905 can withstand radial and axial loads, so that the deformation of the first transmission member 901 is reduced when being subjected to torque, which ensures the concentricity between the first transmission member 901 and the spindle 4, thereby reducing the wear of the gear-shift pawl. The supporting member 905 may be selected from deep groove ball bearing, angular contact ball bearing, thrust bearing, etc.

Since the spindle 4 is equipped with or directly machined with the gear-shift pawl seat, it is not convenient to mount the supporting member 905 directly on the spindle 4. Therefore, a fixation member 906 is provided. The supporting member 905 is first mounted on the fixation member 906, which is in turn fixedly mounted on the spindle 4 to reduce the difficulty of processing. The fixation member 906 has a structure that can be engaged with the gear-shift pawl seat and has an outer circumferential surface that can be fitted with the supporting member 905.

Compared with the transmission mechanism of the conventional technology, the transmission mechanism 9 of the present application only uses three sets of planetary gear mechanisms, namely the planetary gear mechanisms corresponding to the first sun gear 904, the second sun gear 907, and the third sun gear 908, respectively, which can achieve a six-gear transmission. One set of planetary gear mechanism can be omitted, saving the space occupied by the transmission mechanism 9, and reducing the weight of the hub. One sun gear can be omitted, reducing the number of control portions of the manipulation device 81 and the torque required from the driving device 55, and thereby greatly improving the success rate of gear shifting.

FIG. 32 is a longitudinal sectional view of a transmission mechanism 9 in another embodiment. In this embodiment, the first planetary gear 909 is replaced by a compound planetary gear, and the tooth thickness of the first sun gear 904 is appropriately reduced to allow its teeth to externally mesh with the teeth of one set of the compound planetary gear. The rest of the structure is same. Since only a single first sun gear 904 is provided, this part of the planetary gear mechanism still forms one set of planetary gear mechanism. This design has advantages in that, on the premise of providing the same transmission ratio, the radial dimension of the planetary gear mechanism is further reduced, making the structure more compact.

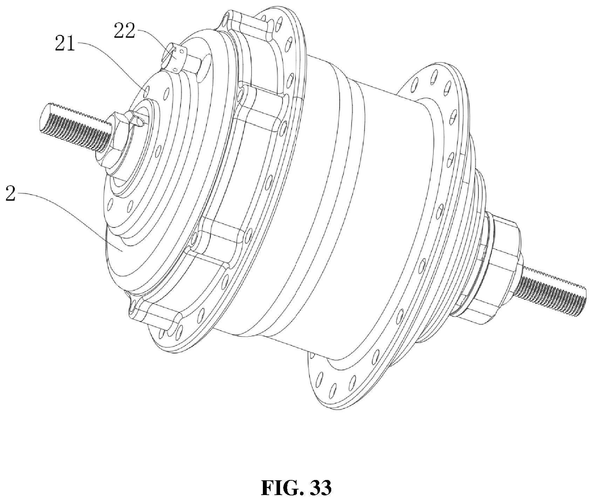

FIG. 33 is a schematic view showing an assembly of a relief valve 22. As shown, the relief valve 22 is mounted on the end cover 2, and includes a spring, a piston, a valve core, and a valve seat. When the pressure inside the cavity of the internal gear hub exceeds a predetermined value, the spring is subjected to pressure and compressed, driving the valve core or the piston to move away from the valve seat so that the pressure relief passage is opened. Through the pressure relief passage, air can be discharged out of the internal gear hub, thereby reducing the pressure inside the cavity of the internal gear hub and avoiding oil leakage problems.

Any reference in this specification to "an embodiment", "some embodiments", "exemplary embodiments", "an example", "a specific example", or "some examples", or the like means that specific features, structures, materials or characteristics described in connection with the embodiment or example is included in at least one embodiment or example of the present application. In the specification, the schematic expressions of the above terms do not necessarily refer to the same embodiment or example. Furthermore, the specific features, structures, materials or characteristics described may be combined in any one or more embodiments or examples in a suitable manner.

The above is only a preferred embodiment of the present application. It should be noted that various modifications and improvements, which could be made by those of ordinary skill in the art without departing from the concept of the present application, also belong to the protection scope of the present application.

## Claims

1. A manual-automatic integrated internal gear hub, **characterized by** comprising a spindle (4), a transmission mechanism (9), a driving mechanism (5), a manipulation mechanism (8), an input member (3), and an output member (1), wherein
the spindle (4) is fixed to a frame of a bicycle;
the driving mechanism (5), the manipulation mechanism (8), and the transmission mechanism (9) are sequentially connected and mounted on the spindle (4);
the input member (3) is fixedly connected to the transmission mechanism (9) and is configured to input a torque to the transmission mechanism (9);
the output member (1) is connected to the transmission mechanism (9) and is configured to input a torque to a wheel of the bicycle;
the transmission mechanism (9) comprises a second transmission member (902), which transmits a torque in a first rotation direction;
the transmission mechanism (9) has at least one transmission ratio;
the driving mechanism (5) is electrically driven and is configured to rotate the manipulation mechanism (8) to a predetermined angle manually and/or automatically, so as to change transmission relationships among components of the transmission mechanism (9) and thus achieve a change in the transmission ratio of the transmission mechanism (9),
the manual-automatic integrated internal gear hub further comprises a torque assistance mechanism (6), one end of which is connected to the manipulation mechanism (8), and the other end of which is connected to the second transmission member (902) and the driving mechanism (5);
the torque assistance mechanism (6) comprises a first connecting member (61), a second connecting member (63), a third connecting member (68) which are rotatably connected to each other, and further comprises a first return member (62);
the first connecting member (61) is configured to transmit a torque output from the driving mechanism (5) and is provided with a first stopper (611), the second connecting member (63) is provided with a torque transmission structure, and the third connecting member (68) is connected to the manipulation mechanism (8) and is configured to output a torque;
one end of the first return member (62) is connected to the first connecting member (61), the other end of the first return member (62) is connected to the second connecting member (63), the first return member (62) provides a first pre-tightening torque; and
the torque assistance mechanism is configured to, when the first connecting member (61) rotates in the first rotation direction and the torque input from the first connecting member (61) exceeds the first pre-tightening torque, and when the first connecting member (61) and the third connecting member (68) rotate relative to each other, the first return member (62) is deformed to cause relative rotation between the first connecting member (61) and the second connecting member (63), so that the torque transmission structure is released from the first stopper (611) and connected to the second transmission member (902) so as to transmit the torque from the second transmission member (902) to the third connecting member (68).

2. The manual-automatic integrated internal gear hub according to claim 1, wherein
a third return member (67) is provided between the second connecting member (63) and the third connecting member (68), one end of the third return member (67) is connected to the second connecting member (63), the other end of the third return member (67) is connected to the third connecting member (68), and the third return member (67) provides a second pre-tightening torque; and
the torque assistance mechanism is further configured to, when the third connecting member (68) rotates in a second rotation direction and the torque input from the first connecting member (61) exceeds the second pre-tightening torque, and when the first connecting member (61) and the third connecting member (68) rotate relative to each other, the third return member (67) is deformed to cause relative rotation between the second connecting member (63) and the third connecting member (68), wherein the first rotation direction and the second rotation direction are opposite.

3. The manual-automatic integrated internal gear hub according to claim 1, wherein
the torque transmission structure comprises an assistance pawl elastically hinged to the second connecting member (63), and
the assistance pawl has a retracted state where the assistance pawl is disconnected from the second transmission member (902) and an extended state where the assistance pawl is connected to the second transmission member (902).

4. The manual-automatic integrated internal gear hub according to claim 3, wherein
the torque transmission structure further comprises a second return member (66), one end of which is fixed to the second connecting member (63), and the other end of which abuts against the assistance pawl.

5. The manual-automatic integrated internal gear hub according to claim 3, wherein
a locking portion (641) and an avoidance area (643) are provided on two sides of the assistance pawl; and
a third contact surface (642) is provided at transition between the avoidance area (643) and the locking portion (641).

6. The manual-automatic integrated internal gear hub according to claim 5, wherein
the second connecting member (63) is provided with a first contact surface (635), and the first stopper (611) is configured to be separated from the first contact surface (635) when moving in the first rotation direction, and to abut against the first contact surface (635) when moving in the second rotation direction.

7. The manual-automatic integrated internal gear hub according to claim 6, wherein
the third contact surface (642) of the assistance pawl and the first contact surface (635) of the second connecting member (63) are located in a same plane.

8. The manual-automatic integrated internal gear hub according to claim 1, wherein
the third connecting member (68) is provided with a fifth stopper (681), and the second connecting member (63) is provided with a fourth stopper (632);
the fourth stopper (632) is configured to abut against the fifth stopper (681) when moving in the first rotation direction and to be separated from the fifth stopper (681) when moving in the second rotation direction.

9. The manual-automatic integrated internal gear hub according to claim 2, wherein
the first pre-tightening torque of the first return member (62) and the second pre-tightening torque of the third return member (67) are oriented in opposite directions.

10. The manual-automatic integrated internal gear hub according to claim 1, wherein
the transmission mechanism (9) comprises at least two states of planetary gear mechanisms and at least one clutch structure;
the driving mechanism (5) is configured to change transmission relationships of the planetary gear mechanisms manually and/or automatically, so that the torque is adjusted by the planetary gear mechanisms and output to the output member (1) selectively through the clutch structure; and
at least one supporting member (905) is provided between two stages of the planetary gear mechanisms.

11. The manual-automatic integrated internal gear hub according to claim 10, wherein
an inner wall of the supporting member (905) is connected to the spindle (4), and an outer wall of the supporting member (905) is connected to an inner wall of the first transmission member (901).

12. The manual-automatic integrated internal gear hub according to claim 11, further comprising a fixation member (906) that is fixedly connected to the spindle (4), wherein
the supporting member (905) is mounted on the fixation member (906).

13. The manual-automatic integrated internal gear hub according to claim 10, wherein
the supporting member (905) is disposed between a first sun gear (904) and a second sun gear (907).

14. The manual-automatic integrated internal gear hub according to claim 10, wherein
two stages of the planetary gear mechanisms are provided, which are a first stage planetary gear mechanism and a second stage planetary gear mechanism, and
the first stage planetary gear mechanism and the second stage planetary gear mechanism are connected in series for transmission.

15. The manual-automatic integrated internal gear hub according to claim 14, wherein
the first stage planetary gear mechanism is configured for speed-increasing transmission.

16. The manual-automatic integrated internal gear hub according to claim 15, wherein
the first stage planetary gear mechanism comprises a first sun gear (904), a first planetary gear (909), a first transmission member (901), and a second transmission member (902),
the first planetary gear (909) is rotatably connected to the first transmission member (901); and
the second transmission member (902) has first gear teeth (9021), the first sun gear (904) has third gear teeth (9041), the first planetary gear (909) has sixth gear teeth (9091), wherein the third gear teeth (9041) of the first sun gear (904) are meshed externally with the sixth gear teeth (9091) of the first planetary gear (909), and the first gear teeth (9021) of the second transmission member (902) are meshed internally with the sixth gear teeth (9091) of the first planetary gear (909).

17. The manual-automatic integrated internal gear hub according to claim 16, wherein
a first clutch structure (9013) is provided between the first transmission member (901) and the second transmission member (902).

18. The manual-automatic integrated internal gear hub according to claim 14, wherein
the second stage planetary gear mechanism is configured for speed-increasing transmission.

19. The manual-automatic integrated internal gear hub according to claim 18, wherein
the second stage planetary gear mechanism comprises a second sun gear (907), a third sun gear (908), a first compound planetary gear (910), a second transmission member (902), and a third transmission member (903);
the first compound planetary gear (910) is rotatably connected to the second transmission member (902), and
the third transmission member (903) has second teeth (9031), the first compound planetary gear (910) has seventh teeth (9101) and eighth teeth (9102), the second sun gear (907) has fourth teeth (9071), the third sun gear (908) has fifth teeth (9081), wherein the fourth teeth (9071) of the second sun gear (907) are meshed externally with the seventh teeth (9101) of the first compound planetary gear (910), the fifth teeth (9081) of the third sun gear (908) are meshed externally with the eighth teeth (9102) of the first compound planetary gear (910), and the second teeth (9031) of the third transmission member (903) are meshed internally with the eighth teeth (9102) of the first compound planetary gear (910).

20. The manual-automatic integrated internal gear hub according to claim 19, wherein
a second clutch structure (9023) is provided between the second transmission member (902) and the third transmission member (903).

21. The manual-automatic integrated internal gear hub according to claim 20, further comprising a shaft sleeve (911), which is connected to the output member (1), wherein
a third clutch structure (9032) is provided between the shaft sleeve (911) and the third transmission member (903).

22. The manual-automatic integrated internal gear hub according to claim 21, wherein
the third clutch structure (9032) and the second clutch structure (9023) are located in a same plane perpendicular to an axis of the spindle (4).

23. The manual-automatic integrated internal gear hub according to claim 21, wherein an outer circumferential surface of the shaft sleeve (911) is provided thereon with anti-slip grooves.

24. The manual-automatic integrated internal gear hub according to claim 1, wherein
the driving mechanism (5) is provided with a gear position feedback module.

25. The manual-automatic integrated internal gear hub according to claim 24, wherein
the gear position feedback module comprises a plurality of gear-position Hall elements, which sense a magnetic field strength of a magnet mounted on a magnet seat (614) of the torque assistance mechanism (6) to obtain pulse signals and determine a gear position to which a driving device (55) of the driving mechanism (5) has rotated.

26. The manual-automatic integrated internal gear hub according to claim 24, wherein
the driving mechanism (5) is provided with a rotation speed feedback module.

27. The manual-automatic integrated internal gear hub according to claim 26, wherein
the rotation speed feedback module comprises a rotation speed Hall element, which senses a magnetic field strength of a magnet mounted in a magnet mounting slot of an end cover (2) connected to the output member (1) to obtain a pulse signal and calculate a rotation speed of the internal gear hub.

28. The manual-automatic integrated internal gear hub according to claim 1, wherein
the driving mechanism (5) comprises a control box (51) and a sealing cover (52) connected to the control box (51),
the control box (51) is configured to accommodate a driving device (55) and a circuit board (54);
the circuit board (54) is provided thereon with a gear position feedback module, a rotation speed feedback module, and a controller, and
each of the driving device (55), the gear position feedback module, and the rotation speed feedback module are electrically connected to the controller.

29. The manual-automatic integrated internal gear hub according to claim 1, wherein
the manipulation mechanism (8) includes a gear-shift pawl seat and a manipulation device (81),
the gear-shift pawl seat is provided on the spindle (4), and a gear-shift pawl is hinged to the gear-shift pawl seat; and
the manipulation device (8) is provided with an open groove, which is configured to control an extension or a retraction of the gear-shift pawl to change transmission relationships among components of the transmission mechanism (9).

30. The manual-automatic integrated internal gear hub according to claim 1, wherein
the output member (1) is connected to an end cover (2), which is provided with a relief valve (22).

31. A bicycle, **characterized by** comprising the manual-automatic integrated internal gear hub according to any one of claims 1 to 30.
